(19) Europäisches Patentamt
European Patent Office
Office européen des brevets

(11) **EP 4 641 254 A1**

(12) **EUROPEAN PATENT APPLICATION**

(43) Date of publication:
**29.10.2025 Bulletin 2025/44**

(21) Application number: **24171583.8**

(22) Date of filing: **22.04.2024**

(51) International Patent Classification (IPC):
**G01S 13/90** (2006.01)     **G01S 13/22** (2006.01)
**G01S 13/28** (2006.01)

(52) Cooperative Patent Classification (CPC):
**G01S 13/904; G01S 13/22; G01S 13/282;**
G01S 13/288

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Iceye Oy**
**02150 Espoo (FI)**

(72) Inventor: **Dogan, Ozan**
**Espoo (FI)**

(74) Representative: **Papula Oy**
**P.O. Box 981**
**00101 Helsinki (FI)**

(54) **HIGH RESOLUTION WIDE SWATH SAR IMAGING USING WAVEFORM DIVERSITY**

(57)     Methods, systems, and techniques for processing synthetic aperture radar ("SAR") echo data in order to increase swath width. Data representing echoes of a transmitted series of radar pulses is received. The pulse repetition interval varies between successive pulses, and at least two waveforms are used to modulate the pulses and are respectively used to image at least two different swaths. The received data is aligned into azimuth bins based at least on receipt times of the echoes. The received data is then processed to generate an image of at least a first swath imaged using one of the waveforms and a second swath that neighbors the first swath and that is imaged using another of the waveforms.

*1900*

| |
|---|
| Transmit the proposed waveforms with staggered PRF ~1902 |
| Receive data with recording DC ~1904 |
| Align received data ~1906 |
| Linear Interpolation of raw data to fill blank regions ~1908 |
| Suppress range ambiguity ~1910 |
| Range Compression ~1912 |
| Linear Interpolation to constant PRF in azimuth direction ~1914 |
| SAR Processing ~1916 |

SAR
Image

**FIG. 19**

**Description**

TECHNICAL FIELD

The present disclosure is directed at high resolution wide swath synthetic aperture radar imaging using waveform diversity.

BACKGROUND

A Synthetic Aperture Radar (SAR) can be used to image an area on Earth, also known as a target area, by transmitting radar beams and recording the return echoes from those transmitted beams. SAR systems can be installed on airborne platforms such as aircraft, as well as in satellites operating from space. Various modes of operating the SAR can be used, such as stripmap, spotlight, ScanSAR (Scanning Synthetic Aperture Radar), and TOPSAR (Terran Observation with Progressive Scan SAR).

Typically, a SAR system transmits radio-frequency radiation in pulses and records the returning echoes. The sampled data is stored for processing in order to form an image. A possible consequence of the pulsed operation of SAR is that ambiguities can arise in the image, for example from radar echoes backscattered from the nadir and other points not in the target imaging area. These ambiguities can arise because it is difficult to perfectly direct a radar beam only to the target image area. In reality, the radar beam has side lobes that also illuminate areas outside of the desired imaging area, and result in radar echoes from these "ambiguous" areas that are then mixed in with the returns from the "unambiguous" areas. These echoes of the previous and later transmitted pulses scattered from undesired regions can include the nadir, which is the point directly below the SAR platform (e.g., a satellite), at its current location. In this case, the SAR image is a combination of an unambiguous image (the desired image), a partially focused ambiguous image, and the nadir.

One way to overcome the problem of ambiguities from range ambiguous regions is to increase the size of the antenna in the elevation direction. This produces a narrower beam so that the side lobes of the beam are reduced and the signal backscattered from the ambiguous regions are also reduced. However, increasing the size of the antenna contradicts with the size, weight, and power "SWAP" requirements of small satellites, as well as the need for imaging wide swaths at high resolution.

Another way that can be used in particular to suppress the nadir ambiguity is to adjust the pulse repetition frequency "PRF" so that the nadir echo time is out of the receive window of the radar. In most cases this is impractical and results in additional constraints on the PRF, which is already optimized to maximize the swath width and minimize the azimuth ambiguity to signal ratio. In addition, no suppression can be achieved with PRF tuning for ambiguous targets that are out of the blind range. Instead of applying a fixed or finely tuned PRF, another method is to use a staggered SAR system in which the ambiguities are located at different ranges for different range lines, as the time distance to the preceding and succeeding pulses continuously varies. The ambiguous energy is therefore incoherently integrated in the Doppler domain and smears as a result. Unfortunately, the suppression rate of the range ambiguity is quite limited with typical system parameters and additional signal processing algorithms are required to achieve equidistant sampling in azimuth direction.

Some ambiguity suppression methods are centred on transmitting a diversity of waveforms in order to be able to identify and suppress ambiguities from the return signal, and then suppressing the residual ambiguity by processing to separate out the ambiguous returns. It will be appreciated that in the following, unless otherwise stated, the term "focusing" is used to refer to a statistical or mathematical filtering process rather than, for example, optical focusing. An example of filtering is a convolution of the conjugate of a transmitted signal with the received signal.

The basic idea behind waveform diversity is to gain the ability to "mark" or identify the transmitted pulses that a particular return signal comes from. To achieve this the system must be able to transmit signals with different marks and to identify the scattered signals accordingly. There are at least three different waveforms proposed in literature: Up and Down Chirps (UDC), Azimuth Phase Coding (APC), and Cyclic Frequency (CF).

UDC (Up and Down Chirp) waveform diversity can be used for nadir suppression such that a good quality SAR image can be extracted. However, the energy is not suppressed, but smeared in the range direction. This can result in range stripes appearing in an image, particularly for a target that has strong backscattering properties. Since the signal is smeared rather than suppressed, the total energy of the ambiguous signal is not significantly reduced. In fact, if the total signal power of a specific target is considered, the suppression capability of UDC may be as low as 3dB for a point target, and 0dB for an extended one.

To overcome some of these problems with UDC, some post-processing algorithms that are based on dual focusing techniques are proposed in literature. In these techniques, raw data is focused according to the ambiguous region. The image of the ambiguous region is then thresholded and complex data is suppressed, with higher backscattering assumed to represent ambiguous targets. One downside of this technique is that some useful signal may also be lost. The last steps are defocusing back to raw data and then focusing the raw data according to the Unambiguous region. However, this algorithm can be computationally intensive, so post-processing algorithms that are computationally less complex are desired.

Another waveform diversity method is APC (Azimuth Phase Coding) where the phase of each transmitted pulse is alternated to shift the Doppler bandwidth of the unambiguous target signal out of the processing band. The idea is based on setting the PRF high enough such that the unambiguous and ambiguous Doppler bandwidth of the signal is separated. Unfortunately, this results in narrower swath widths or worse azimuth resolution, neither of which is desirable for SAR imaging.

CF (Cyclic Frequency) is a method that relies on shifting the frequency of the transmitted pulse cyclically to generate orthogonal waveforms. However, in this case, the required rapid frequency hop results in practical problems like abrupt power drift, complexity in the hardware implementation and increased calibration burden. In addition, SAR systems may have limited memory for storing distinct waveforms. For example, the TerraSAR-X satellite can only store up to eight different waveforms for an acquisition.

SUMMARY

This summary is provided to introduce a selection of concepts in a simplified form that are further described below in the detailed description. This summary is not intended to identify key features or essential features of the claimed subject matter, nor is it intended to be used to determine the scope of the claimed subject matter.

According to one aspect, there is provided a method of processing SAR echo data, the method comprising: receiving data representing echoes of a transmitted series of radar pulses, wherein a pulse repetition interval ("PRI") varies between successive ones of the pulses, and wherein at least two different waveforms are used to modulate the pulses and are respectively used to image at least two different swaths; aligning the received data into azimuth bins based at least on receipt times of the echoes; and processing the received data to generate an image, wherein the image is of at least a first swath imaged using one of the waveforms and a second swath that neighbors the first swath and that is imaged using another of the waveforms.

The at least two different waveforms may comprise an up chirp and a down chirp.

The at least two different waveforms may further comprise another up chirp or down chirp further encoded using azimuth phase coding.

The at least two different waveforms may further comprise another up chirp or down chirp further encoded using a cyclic waveform.

The method may further comprise applying dual focusing to the received data to suppress range ambiguities.

The at least two different waveforms may be orthogonal to each other.

The radar pulses may be transmitted according to a PRI scheme that repeats every $N$ pulses.

The PRI may repeatedly increase or decrease monotonically repeatedly over the $N$ pulses.

The PRI may increase or decrease monotonically once over a first portion of the $N$ pulses, and again over a second portion of the $N$ pulses. The minimum and maximum PRIs may differ for the first and second portions.

The image may be of a processed image region, and a mean PRI for the $N$ pulses may be determined as

$$PRI[i] = PRI_{max} - \frac{\Delta\tau}{N_s}\left(i - \lfloor 2 * i / \lfloor N \rfloor \rfloor \frac{N-1}{2}\right),$$

in which

$$PRI_{max} = PRI_{mean} + \frac{N-1}{2}\frac{\Delta\tau}{N_s},$$

$\tau$ is chirp duration, $N_s$ is a mean number of the pulses in transit either to or from ground computed using time to center of the processed image region, and $\Delta$ is a variable to permit fine tuning of the mean PRI.

The swaths may neighbor each other and a border delineating the swaths may be sawtoothed.

The method may further comprise: transmitting the pulses; and receiving the echoes. Electronic beam steering may be applied to focus on the echoes while receiving the data.

An up chirp and a down chirp may be used to modulate the pulses; the at least two different swaths may comprise a central swath and two neighboring swaths; and non-corresponding portions of the two neighboring swaths and the central swath may be used to generate the image.

According to another aspect, there is provided a synthetic aperture radar platform comprising: an antenna; a computing system communicatively coupled to the antenna, the computing system configured to: transmit a series of radar pulses, wherein a pulse repetition interval ("PRI") varies between successive ones of the pulses, and wherein at least two different waveforms are used to modulate the pulses and are respectively used to image at least two different swaths; receive echoes of the radar pulses; and store or transmit to ground data representing the echoes.

Any of the methods described here may be implemented to operate a satellite already in orbit, and may therefore be implemented in the form of computing system configured for controlling a SAR to operate. The computing system may be onboard, e.g. on the platform carrying the SAR system, or may be distributed, for example between a platform and a ground station.

There is also provided here a computer-readable medium comprising instructions which, when implemented in a computing system forming part of a SAR operation system cause the system to any of the methods described here.

There is also provided here a SAR system configured to transmit successive pulses of radio waves to illuminate a target area according any of the methods described here.

There is also provided a SAR system configured for transmitting the pulsed waveform.

Embodiments of the invention also provide a computer readable medium comprising instructions, for example in the form of an algorithm, which, when implemented in a computing system forming part of a SAR operation system, cause the system to perform any of the methods described here.

Features of different aspects and embodiments of the invention may be combined as appropriate, as would be apparent to a skilled person, and may be combined with any of the aspects of the invention.

BRIEF DESCRIPTION OF THE DRAWINGS

Embodiments of the invention will be described, by way of example only and with reference to the following drawings, in which:

Figure 1 is a schematic perspective view of a satellite in orbit above Earth,

Figure 2 is a schematic illustration of a satellite operating in space, an area to be imaged, the nadir point and several ambiguous areas,

Figure 3a is a plot of range compressed data for an unambiguous point target and a point target in the ambiguous region,

Figure 3b is a plot of range compressed data for an unambiguous point target and an 15 extended target in the ambiguous region,

Figure 4a is a flow chart of a method of extracting an unambiguous image from SAR data using a double dual focusing method,

Figure 4b is a flow chart of a method of extracting an unambiguous image from SAR data using a delta focusing method,

Figure 5a is a plot of detection points extracted by thresholding the ratio of the cell under test to the background for a focused nadir image,

Figure 5b is a plot of the sum of the ratio of the cell under test to the background for each range bin for a focused nadir image,

Figure 6a is a flowchart showing an alternative method,

Figure 6b is a flowchart showing another alternative,

Figure 7 is a flowchart showing a method for detecting nadir in the SAR data,

Figure 8a is SAR image showing a strong nadir echo, an ambiguous region return, and a mountainous area with strong scatterers,

Figure 8b is a SAR image showing the nadir return smeared in the range direction.

Figure 8c is a SAR image after post-processing with nadir fully suppressed,

Figure 8d is a SAR image after post-processing with both nadir and range ambiguity fully suppressed,

Figure 9a is a plot showing the detection of nadir from a SAR image collected with waveform diversity,

Figure 9b is an ambiguous image of SAR data collected with waveform diversity,

Figure 9c is a plot showing the detection of ambiguities from a range ambiguous region from a SAR image collected with waveform diversity,

Figure 10a is SAR image collected with waveform diversity and with range stripes,

Figure 10b is a plot of the sum of the energy in the range direction vs azimuth for the middle section of figure 10a compared to a default image,

Figure 10c is a plot of the sum of the energy in the range direction vs azimuth for the right section of figure 10a compared a default image,

Figure 11a is a SAR image with a high incidence angle and a high pulse repetition rate showing ambiguities arising from an ambiguous region,

Figure 11b is an ambiguous image of the SAR image of figure 11a and without range ambiguity suppression,

Figure 11c is an unambiguous SAR image of the image of figure 11a and without range ambiguity,

Figure 11d is a plot of the comparison of the sum of the energy in the range direction versus azimuth compared to the default image of figure 11a,

Figure 12 is a schematic illustration of a satellite operating in space, an area to be imaged, the nadir point, various swaths, and a series of modulated pulses used to image those swaths,

Figures 13a-c respectively show a staggered pulse repetition frequency scheme, the corresponding recording duty cycle, and expected data to be acquired from a series of modulated pulses transmitted in accordance with Figures 13a and 13b,

Figure 14 is a schematic showing how received data in the form of echoes of waveform diverse pulses are aligned,

Figure 15 shows raw data acquired generated from echoes aligned in accordance with Figure 14,

Figure 16 is an image experimentally acquired using a method for performing high resolution wide swath SAR imaging using waveform diversity, according to an example embodiment,

Figures 17a-e are images of ships located at different distances from the center of the scene shown in Figure 16,

Figure 18 is an image of an urban region, and magnified portions of the image, shown in Figure 16, and

Figure 19 is a flowchart of a method for performing high resolution wide swath SAR imaging using waveform diversity, according to an example embodiment.

Common reference numerals are used throughout the figures to indicate similar features.

DETAILED DESCRIPTION

Embodiments of the present invention are described below by way of example only. These examples represent the best ways of putting the invention into practice that are currently known to the applicant although they are not the only ways in which this could be achieved.

Some embodiments of the invention provide systems and methods for operating a SAR (Synthetic Aperture Radar) system to obtain images of areas on Earth. For this purpose, a SAR system may be carried on a platform travelling with respect to the surface of Earth. For example, a SAR system is commonly carried onboard satellites. However, the methods and systems described here are not limited to space and may be performed using aircraft or any other suitable platform.

In the following description, the term unambiguous signal will be used to refer to a signal that is acquired from the target image area, also referred to here as the "desired" imaging area. The ambiguous signal will be used to refer to a signal that is acquired from the ambiguous regions outside of the desired imaging area. The ambiguous signal can be mixed in with the unambiguous signal and can cause ambiguities in the resulting images. Ultimately the desire is to obtain an image of the unambiguous region (target image area) with as few ambiguities as possible. According to some of the methods described in this disclosure, this may include a step of obtaining an image of the ambiguous region, referred to in this disclosure as the ambiguous image. This refers to SAR raw data that is focused with the parameters of the ambiguous region in order to obtain an image of that region. The ambiguous image itself can also have value because it provides additional imagery of another area with very little additional cost. According to some embodiments described below, below, the ambiguous image can be used to provide high resolution wide swath SAR imagery at relatively low cost on SAR satellites without digital beam forming by using staggered Pulse Repetition Frequency (PRF) techniques combined with waveform diversity techniques.

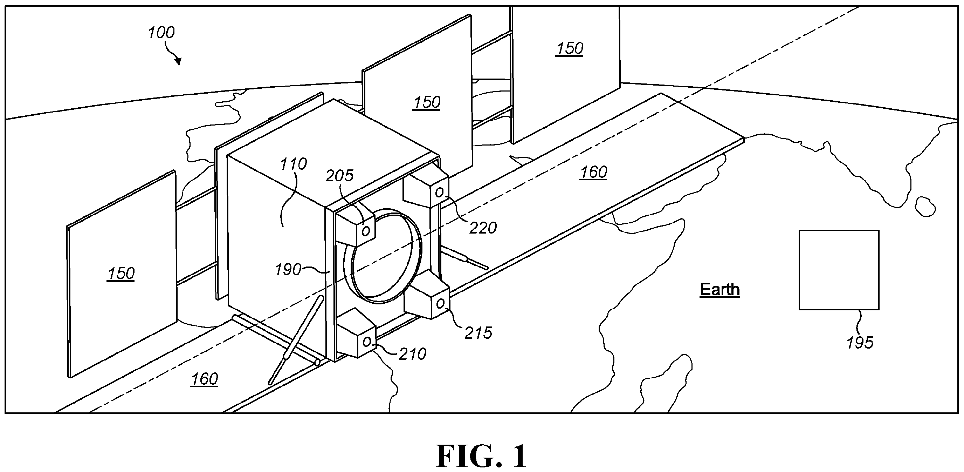

Figure 1 is a perspective view of a satellite 100 in orbit over Earth as an example of a platform which may be used in the methods and systems described here. The satellite comprises a body 110 and "wings" 160. One or more antenna elements may be mounted on the satellite wings. The satellite 100 additionally comprises a propulsion system 190 shown to be mounted on the body 110 on the surface opposite the solar panels 150. The propulsion system comprises thrusters 205, 210, 215, 220, which are generally operated to maintain the satellite 100 in a particular orbit. For example, the thrusters 205, 210, 215, 220 may be used to propel the satellite 100 in a particular direction with respect to the earth. As noted elsewhere, the methods described here are particularly but not exclusively suited to implementation in connection with a SAR carried on a satellite.

The body 110 may house a computing system and control equipment as will be familiar to those skilled in the art. Figure 1 also shows schematically a ground station computing system 195 configured to post-process the received SAR data. Some of the steps of the methods described here may be implemented at a ground station computing system.

As is known in the art, a SAR system is operated to alternate periodically between a transmission mode in which a pulse of radiation is directed towards the surface of Earth and a reception mode in which radiation reflected from the surface is received.

As is also known in the art, to create a SAR image, successive pulses of radio waves are transmitted to "illuminate" a target area, and the echo of each pulse is received and recorded. The pulses can be transmitted, and the echoes can be received, using a single beam-forming antenna. As the SAR is carried on board a moving platform, such as a satellite, and therefore moves with respect to the target, the antenna location relative to the target changes with time and the frequency of received signals changes due to the Doppler effect. Signal processing of the successive recorded radar echoes allows for the combination of recordings from multiple antenna positions, thereby forming a synthetic aperture antenna (SAR) to allow creation of high resolution images.

An area being imaged by the SAR is known as a footprint. A direction along the flight direction of the SAR is usually referred to as the azimuth or along-track direction. A direction transverse to the flight direction is usually referred to as the range, elevation, or cross-track direction. A direction opposite to the flight direction corresponds to the backward azimuth direction.

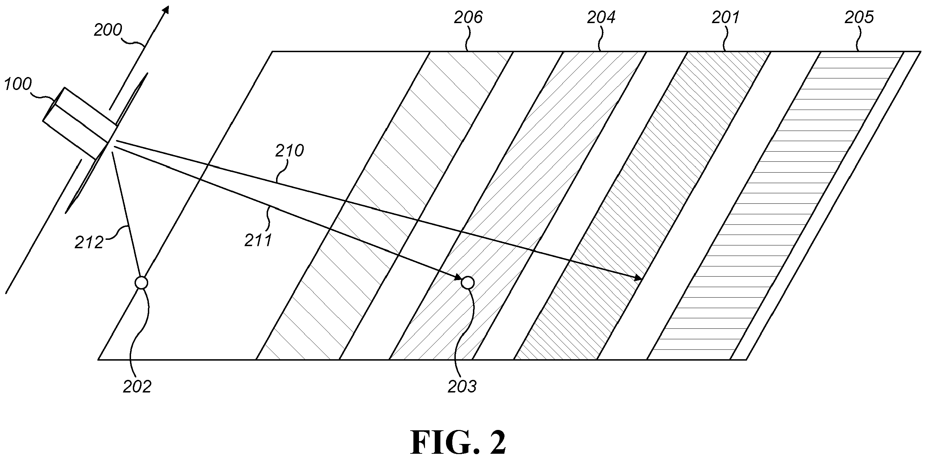

Referring to Figure 2, a satellite 100 is shown travelling along a flight track 200 in the azimuth direction. The satellite is operating in a "side-scan" mode where the area to be imaged is off to the side of the flight path of the satellite rather than directly underneath it. This is typical for SAR satellites since the bright return due to specular reflections from objects directly underneath the satellite make it difficult to form an image of the nadir region. The shaded region 201 represents an area to be imaged (unambiguous region). Point 202 is the nadir point, or the point directly under the satellite. Regions 204, 205, and 206 are ambiguous regions from which radar returns due to lobes in the radar beam can cause ambiguities in the SAR image. Point 203 is a point in an ambiguous region 204, which is next to the unambiguous region 201 for which an image is desired. Figure 2 shows the satellite 100 operating in a classic strip map mode, where the SAR beam is swept along one swath along the ground as the satellite travels in its orbital path. However, examples according to the current disclosure can be equally applied to any SAR mode, including for example spotlight mode, ScanSAR (Scanning Synthetic Aperture Radar) mode, and TOPSAR (Terrain Observation with Progressive Scans SAR) mode. The collected SAR data typically comprises echo signals from the unambiguous region, ambiguous regions, and the nadir which, respectively, correspond to the unambiguous image, ambiguous image, and a the nadir image.

In an example according to the current disclosure, an improved waveform sequence and method of using waveform diversity is described. In an example, the waveform coding for up/down chirps (UDC) and azimuth phase encoding (APC) are applied together to suppress both nadir returns and ambiguities arising from zones proximate to the desired imaging area in order to produce an improved SAR image.

For UDC, rather than transmitting radar pulses with a single frequency, the frequency of each pulse is either swept up or down over the duration of the pulse, creating either an "up chirp" or a "down chirp". The transmitted signal by the satellite 100, neglecting the initial phase and power terms, can be written as follows:

$$st_U = exp(j\pi\alpha t^2)rect[\frac{t}{T_p}] \qquad (1)$$

$$st_D = exp(-j\pi\alpha t^2)rect[\frac{t}{T_p}] \qquad (2)$$

Where $st_u$ and $st_d$, respectively, represent the transmitted signals with an up chirp and a down chirp, $\alpha$ is the chirp rate, $t$ is the fast time (or time along the range direction), $Tp$ is the pulse width and $rect$ is the rectangle function.

The return echoes will carry either the up or down "signature" thereby indicating whether the return is from a transmitted pulse that has an up-chirp or one that has a downchirp. For example, an up chirp is transmitted to the imaging area in question. Given the distance to the imaging area and the speed of light, the time at which the return echoes from that area would be expected is known. However, there may be some returns from other closer or further areas that are mixed in with the returns from the desired imaging area. For example, the Nadir is much closer so returns from later transmitted pulses could show up along with the pulses that have travelled to the imaging area and back. This is an example of an ambiguity. By carefully selecting the sequence of up and down chirps so that the unambiguous image returns are for example all up chirps while the nadir returns are down chirps for a given point in time, it is then possible to filter out the nadir return using a matched filter.

The matched filter output of the down chirp with the reference signal of up chirp is:

$$r(t) = \frac{1}{\sqrt{2}}[rect(\frac{1}{2T_p})]exp(-j\pi\frac{\alpha}{2}t^2) \qquad (3)$$

The opposite case (matched filter output of the up chirp with the reference signal of down chirp) has an opposite phase sign inside the exponential. Therefore, the focusing according to the unambiguous reference signal makes the ambiguous signal unfocused with twice the pulse (2Tp) width and half the chirp rate ($\alpha/2$) as compared to the transmitted signals (1) and (2). Mathematically, the focusing here is a convolution of the conjugate of the transmitted signal with the received signal. Note that although chirps or pulses with linear frequency sweeps either up or down are described by way of an example, other types of frequency sweeps can be used in the same manner according to current disclosure. Other examples of frequency modifications that can be used to identify pulses include but are not limited to non-linear frequency sweeps, triangular frequency sweeps, parabolic frequency sweeps, or cyclic frequency sweeps.

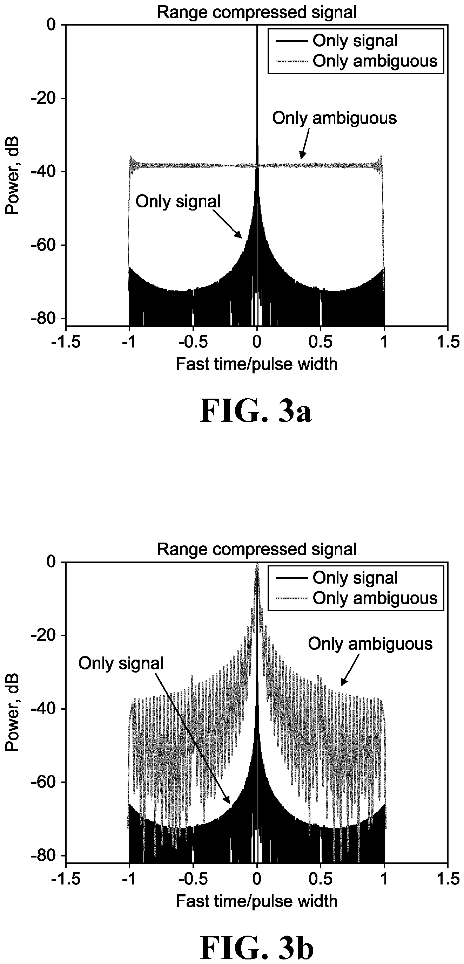

Figure 3a shows a plot of a simulated matched filter output of the unambiguous point target compared with the ambiguous point target, where the transmitted waveform is UDC encoded. Figure 3b shows the same unambiguous point target output with an ambiguous extended target (80m long target with point targets at each range sampling spacing). The simulation parameters are given in Table 1 below. It is seen that UDC waveform can suppress the point targets by smearing the energy. However, if the target backscattering is strong enough, one may expect range stripes to appear in the image. For the extended target case, and depending on the size of the target, it can be seen in 3b that UDC may not help to significantly reduce the ambiguous signal. Further modification to the waveform is proposed to address this issue, as described below.

Table 1

| Parameter Name | Value | Unit |
|---|---|---|
| Chirp Bandwidth | 116 | MHz |
| Sampling Rate | 131 | MHz |
| Pulse width | 33 | us |
| Slant range to first pixel | 687.7 | km |
| Incidence Angle | >35 | Degree |
| PRF | 4000 | Degree |

In an example, UDC is combined with Azimuth Phase Coding (APC) to better reduce ambiguities arising from the nadir as well as from ambiguous zones close to the desired imaging area, and in particular from the extended targets as described above. The principal idea of APC is to shift the Doppler spectra of ambiguities arising from the range-ambiguous regions so they can be mitigated during a SAR focusing operation. However, recall that applying APC on its own can have limitations such as narrower swath widths or degraded azimuth resolution.

In the following, methods are described in which an ambiguity index is calculated for the nadir of the platform, and a frequency sweep direction sequence is determined based on this nadir ambiguity index. The waveform is then encoded with the determined frequency sweep direction sequence and a relative phase sequence (APC) for successive pulses of the waveform.

The nadir ambiguity index may be a positive or negative integer. In other words, different frequency sweep direction sequences or UDC sequences are applied based on a first ambiguity index being the ambiguity index of the nadir return.

Additionally, different relative phase sequences or APC sequences may be applied based on a second ambiguity index, for example the ambiguity index of the ambiguous region with the strongest return (other than the nadir). Since the ambiguous region with ambiguity index equal to one is typically the strongest return, this may be used as the second ambiguity index.

This method of creating waveform diversity can be used to reduce ambiguities from both the nadir return and from ambiguous zones close to the desired imaging area. If the nadir region is out of the range of the radar echo returns, both the UDC and APC portion of the waveform can be selected based on the ambiguity index of the ambiguous region expected to have the strongest radar echoes, referred to here as the range ambiguity index.

The determination of frequency sweep direction sequence may comprise selecting a frequency sweep direction sequence from a plurality of frequency sweep direction sequences.

The ambiguity index, for the nadir or any other region, may depend on one or more of slant range, estimated distance from the platform to an ambiguous point, and pulse repetition rate of the waveform.

The ambiguity index, for an ambiguous point assuming a flat Earth, can be expressed as:

$$N_{amb} = \left\lfloor \frac{R - R_n}{c/2PRI} \right\rfloor \qquad (4)$$

where $R$ is the slant range to the far extent of the planned scene or target area to be imaged (i.e., the unambiguous region), $R_n$ is the estimated range to the ambiguous point, $c$ is the speed of light, PRI is the pulse repetition interval and $\lfloor\rfloor$ is the floor operator. The ambiguity index may be an integer, and/or can be positive or negative.

An ambiguity index can be calculated for the nadir and for any point in any other ambiguous region. With reference to Figure 2, line 210 represents the distance to the far extent of the unambiguous area to be imaged (area 201) and is $R$ for this example. Point 203 is a point in an ambiguous zone 204 outside of the area to be imaged 201. $R_n$ for point 203 is the distance represented by line 211. In an example, the ambiguity index for point 203 is one. In fact, all points falling in ambiguous area 204 would have an ambiguity index of 1. The ambiguity index is indicative of the order of the range ambiguity. The strongest ambiguities will typically be those arising from the nadir point 202. Since ambiguous area 204 is the closest zone to the unambiguous area 201, points with ambiguity index one are most likely (but not always) to give rise to the next strongest ambiguity signals. In this example, points in ambiguous area 205 would have an ambiguity index of -1. Points in ambiguous area 206 would have an ambiguity index of 2. In the case of the nadir point 202, the estimated range $R_n$ would simply be the height of the satellite above ground, as indicated by the distance represented by line 212. In the below, the symbol $N_{nadir}$ is used to denote the nadir ambiguity index and $N_{range}$ is used to denote the ambiguity index of points in other ambiguous regions. The ambiguity index of the nadir point 202 will depend on the scene geometry, the distance represented by line 210 to the area to be imaged, and the distance from the satellite 100 to the nadir point 202, which is equivalent to the height of the satellite above the ground.

It is noted that $N_{amb}$ of a particular point depends on the location of the area being imaged and can be different for different image acquisitions. For example, if ambiguous zone 206 were in fact the area to be imaged, the ambiguity index of the nadir point 202 would be lower than in the example where area 201 is the area to be imaged. The ambiguity index of a point at a fixed distance from the satellite may change multiple times during the course of one orbit because a satellite may be tasked at different parts of the orbit to image areas that are closer or farther away from the flight track 200. Intuitively, $N_{amb}$ can be thought of as indicating the spatial order of the ambiguous region from the unambiguous region. The further away the ambiguous region is from the unambiguous region, the higher the $N_{amb}$ of that ambiguous region. It will be appreciated that the values of $R$ and $R_n$ will also depend on the satellite configuration and mission planning. For example, the antenna pattern in elevation may dominate the received signal power more than the distance to the target does. Hence, as previously mentioned, the strongest ambiguity from an ambiguous region other than nadir is typically the first (positive) number of ambiguity with range ambiguity index $N_{range} = 1$. For this region the antenna gain is higher than for other ambiguous regions, even though some other ambiguous regions are close to the SAR platform. Since the ambiguities from ambiguous regions are mostly sourced form $N_{range}$ = 1, in some examples the waveform diversity is set according to the fixed range ambiguity index ($N_{range}$ = 1), and varying nadir ambiguity index $N_{nadir}$. In the latter case, $R_n$ in equation 4 becomes the estimated range to the nadir point.

As will be shown below in an example, encoding the waveform with both UDC and APC can act to suppress both the nadir return and the returns of other ambiguous regions. The nadir scattering is a bright target that falls within a couple of pixels in the SAR image. As a result, nadir can be defined as a point target (in range direction) and UDC can be used to suppress it successfully. The remaining ambiguities from the range ambiguous regions can be suppressed with APC.

In Table 2, three different waveform sequences combining UDC with APC are defined for different values of $N_{nadir}$ (first column) and odd $N_{range}$ (second column). In these sequences, the UDC sequence is defined to suppress the nadir ambiguity while APC is defined to suppress the ambiguities from the range ambiguous regions. The ambiguity index is limited to 5 but can readily be increased with the same rationale.

Table 2

| Nadir No | Range Arab No | Waveform Sequence |
|---|---|---|
| Odd | Odd | U. D, U+$\pi$,D+$\pi$,... |
| 1 | Odd | U, U, D+$\pi$,D+$\pi$,... |
| 4 | Odd | U, U, U+$\pi$,U+$\pi$, D, D, D+$\pi$,D+$\pi$... |

In an example, suppose $N_{nadir}$ is calculated to be 4. This means that the received signal is shifted by 4 pulses relative to the transmitted signal. In this case, nadir suppression works well as there is a mismatch in the chirp direction between all the transmitted and received pulses, as shown below in Table 3:

Table 3

| Transmitted pulse chirp & phase | U | U | U ($\pi$) | U($\pi$) | D | D | D($\pi$) | D($\pi$) |
|---|---|---|---|---|---|---|---|---|
| Received pulse chirp & phase of nadir return | D | D | D ($\pi$) | D($\pi$) | U | U | U ($\pi$) | U ($\pi$) |

This means that the Nadir can be suppressed relatively easily. For the range ambiguous region, the strongest returns are usually for the region closest to the region being imaged and to the satellite, which is the range ambiguous region with range ambiguity index 1. In the case of range ambiguity index equal to 1, all the received pulses from the ambiguous region of greatest interest are shifted by one relative to the transmitted pulse as follows:

Table 4

| Transmitted pulse chirp & phase | U | U | U ($\pi$) | U($\pi$) | D | D | D ($\pi$) | D ($\pi$) |
|---|---|---|---|---|---|---|---|---|
| Received pulse chirp & phase of range ambiguous return | D ($\pi$) | U | U | U($\pi$) | U ($\pi$) | D | D | D($\pi$) |

Thus, for the received range ambiguous signal, there are only 2 out of 8 pulses that show a mismatch (U with D, ignoring the phase ($\pi$) encodings for now) with the transmitted signal, and 6 pulses are matched (U with D). For this reason, in an example according to the current disclosure, the waveform is further encoded with azimuth phase coding (or APC) by adding a phase shift of 0 or $\pi$ to help to reduce the ambiguities from the range ambiguous region. The principal idea of APC is to shift the Doppler spectra of the range ambiguity so that it is mitigated during the SAR focusing operation. In order to shift the Doppler spectra by PRF (pulse repetition frequency)/2, a 0, $\pi$. 0, $\pi$, 0, $\pi$, 0, $\pi$,... phase difference is required between the transmitted and received pulses. This can be achieved if the transmitted up and down chirps are further modulated with 0, 0, $\pi$, $\pi$, 0 0, $\pi$ $\pi$,... phase encodings (as is shown above in Table 4) for the case when $N_{range}$ is odd. With phase taken into account, there are now 6 out of 8 mismatches, thereby allowing more of the signal from the odd range ambiguous regions to be identified and removed in post processing. When $N_{range}$ is even and equal to 2, the transmitted pulses can be modified using APC to be 0,0,0, $\pi$,0,0,0, $\pi$ .... When $N_{range}$ is equal to 4, the pulse sequence can be modified with 0,0,0,0,0 $\pi$,0,$\pi$. Thus, in this example $N_{nadir}$ is used to define the UDC pattern of the waveform, and $N_{range}$ the APC pattern of the waveform. The combined waveform allows for suppression of ambiguities from the nadir and from either the odd or even ambiguous regions.

The waveform sequences are not limited to the ones listed above. Other sequences are also possible. For example, for up/down chirp (UDC) direction waveform encoding other frequency direction sequences are possible as follows:

(a) If $N_{nadir}$ is odd the chirp direction sequence can be 'UDUDUDUD....', or 'DUDUDUDU... '
(b) If $N_{nadir}$=2 the chirp direction sequence can be 'UUDDUUDD....', or 'DDUUDDUU... '
(c) If $N_{nadir}$=4 the chirp direction sequence can be 'UUUUDDDD....', or 'DDDDUUUU...'

where 'U' is an 'up chirp' modulation and 'D' is a down chirp modulation. Higher even numbers may be ignored as the power in these ambiguities is usually insignificant. Thus, the determination of frequency sweep direction sequence or UDC may comprise selecting a sequence from a plurality of possible sequences depending on the nadir ambiguity index.
In general, for phase waveform encoding (APC), the phase sequence can be determined with the following formula:

$$\varphi_k = \varphi_{k\text{-Namb}} + k\pi + \pi$$

where, $\varphi_k$ is the phase of the $k^{th}$ pulse. Notice in the first $N_{amb}$ phases the starting phase of the waveform can be selected between 0 or 5 $\pi$. For instance:

(a) If $N_{range}$ is odd, the phase coding sequence can be selected as one of these:

(i) '0,0,$\pi$, $\pi$,0,0, $\pi$, $\pi$...',
(ii) '$\pi$, $\pi$,0,0, $\pi$, $\pi$, 0, 0...'

(b) If $N_{range}$ is 2, the phase coding sequence can be selected as one of these:

(i) '0,0,0, $\pi$,0,0, 0, $\pi$...' and the shifted versions '$\pi$. 0,0,0, $\pi$,0,0, 0...' , '0, $\pi$. 0,0,0, $\pi$,0,0, ...' and '0,0,$\pi$. 0,0,0, $\pi$,0, ...'
(ii) '$\pi$, $\pi$,$\pi$,0, $\pi$, $\pi$, $\pi$, 0...' and the shifted versions

(c) If $N_{range}$ is 4, the phase coding sequence can be selected as one of these:

(i) '0,0,0,0,0,$\pi$,0,$\pi$' and the shifted versions
(ii) '0,0,$\pi$, $\pi$,0,$\pi$, $\pi$, 0' and the shifted versions
(iii)'0,$\pi$,$\pi$, $\pi$,0,0,$\pi$ , 0' and the shifted versions
(iv)'$\pi$,$\pi$,$\pi$, $\pi$,$\pi$,0,$\pi$, 0' and the shifted versions

Thus it can be seen that to account for a range ambiguity index other than 1 the determination of relative phase sequence may be made, according to an example, based on whether the range ambiguity index is odd, two, or four. One frequency sweep direction sequence may be used for all instances where $N_{nadir}$ is odd, and a larger set of frequency sweep direction sequences may be available for different even values of $N_{nadir}$. Although shifts of 0 and $\pi$ are shown, the pulse does not necessarily need to be shifted by $\pi$, and other values such as -$\pi$/2 and $\pi$/2 are possible. Shifting can also be carried out by less than $\pi$ but the performance in suppressing ambiguities from range ambiguous regions may not be as good.
Examples of U and D pulses were already given in Equations (1) and (2). For the sake of completeness, the definition of U + $\pi$ and D + $\pi$ can be given as:

$$st_{U_\pi} = exp(j\pi\alpha t^2 + j\pi)rect[\frac{t}{T_p}] \qquad (5)$$

$$st_{D_\pi} = exp(-j\pi\alpha t^2 + j\pi)rect[\frac{t}{T_p}] \qquad (6)$$

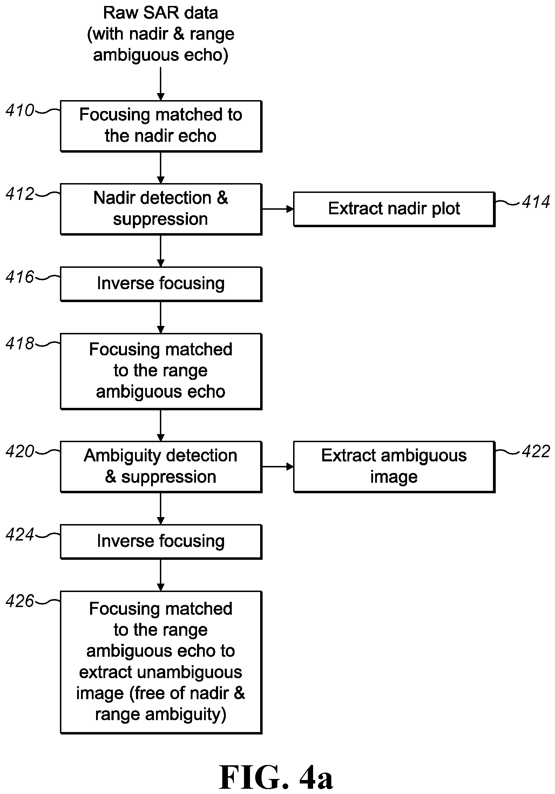

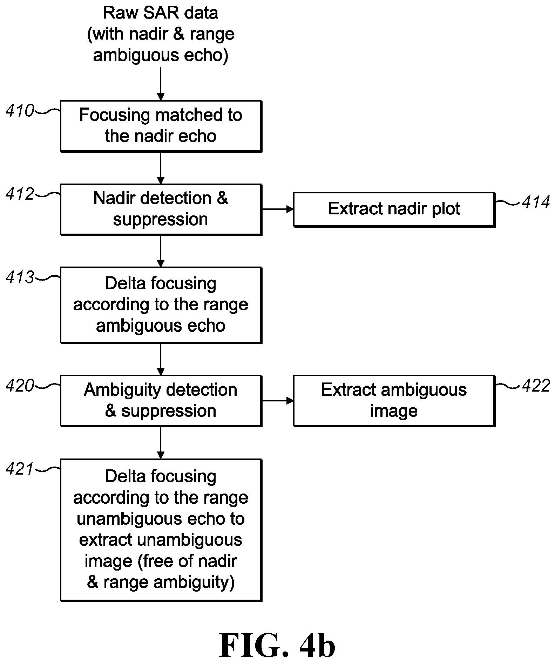

After the SAR data is collected, for example by combining UDC and APC with a frequency sweep direction sequence and/or relative phase sequence chosen based on ambiguity index, it can be post-processed to suppress the nadir and range ambiguities.
The received raw echo data will correspond to an unambiguous region, an ambiguous region, and the nadir. The processing may comprise extracting nadir data and the ambiguous data in a dual focusing process.
An example of two different post processing algorithm flows are presented in figures 4a and 4b. These figures show post-processing methods using dual focusing to remove the nadir ambiguities and ambiguities arising from the range ambiguous regions. In general, SAR data is first processed to detect and suppress the nadir, and then a plot of nadir is extracted. The data is subsequently processed to detect and suppress the ambiguous image and to extract the range ambiguous image. Lastly the SAR image of the unambiguous region is extracted, which after this process is substantially free of or has much reduced nadir ambiguities and ambiguities from other range ambiguous regions.

The methods described here are not limited to the order of operations illustrated. In particular, the extraction of the ambiguous image may take place before the extraction of nadir image, or vice versa.

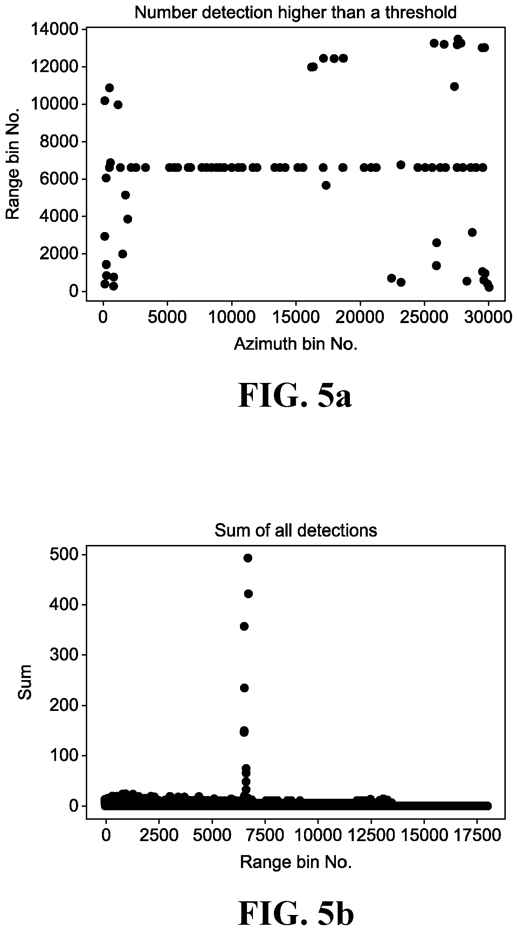

Concentrating initially on figure 4a, the input of the algorithm is the SAR raw data, which corresponds to data from nadir, the ambiguous region and the unambiguous region. The first operation 410 is focusing the SAR data according to the nadir echo to obtain a focused image of the nadir. There are two major features of the nadir within an image. First, the signal power is high due to the direct reflection back of the transmitted signal from objects at the nadir. Secondly the range only deviates within a narrow region in azimuth time, and even mostly in the same range bin for successive azimuth bins. At operation 412, the nadir is detected and suppressed. In order to detect the nadir, a range sliding window is applied to extract the ratio of the cell under test to the background. The result is shown in figure 5a, which shows the detection plots in a nadir focused image. This ratio is summed up for each range bin to detect the nadir as it is presented in Figure 5b. It is clearly seen that nadir range bins are between 6200 - 6500 while plots outside of this region may be useful signal.

Nadir detection has two advantages: the first is that it is less likely to suppress the useful signal, and the second is that the above-the-ground altitude of the satellite is measured and can be used for radar altimetry purposes. Subsequently, the nadir ambiguity is suppressed by dividing the data with the time bandwidth product. Additionally, a plot of nadir is extracted at operation 414.

At operation 416, the SAR data is inverse focused to extract the raw SAR data (now without the nadir echo). The inverse focusing is achieved by applying the conjugate of the filter that was used for focusing the raw data according to the nadir 5 parameters. A successive application of focusing and inverse focusing is phase and amplitude preserving unless no suppression is performed. The major challenge about this implementation is to preserve the desired signal that is not affected by nadir. To achieve this goal, the focusing and inverse focusing is implemented to process the full bandwidth of the signal. Another challenge is to detect the nadir so that only the nadir affected features are suppressed. The focusing includes the Range Compression (RC), Range Cell Migration Correction (RCMC) and Azimuth Compression (AC). Within this context, RC uses matched filtering and the data with the reference pulse number that is shifted with the range ambiguity index relative to the transmitted pulse. RCMC is implemented as a phase multiplication. Reference function for AC is estimated by using the corresponding range.

At operation 418, the SAR data is focused with a filter matched to the range ambiguous echo. At operation 420, the range ambiguity is detected and suppressed. Range ambiguity detection is a problem that has many aspects. The most important feature of range ambiguity is that the power of the signal is sufficiently high such that even the unfocused image of the target appears in the unambiguous image. In this case, an Ordered-Statistic Constant False Alarm Rate (or OS CFAR) method [1] can handle the detection problem. However, OS CFAR may result in false alarms for the regions that the unambiguous targets dominate. A Cell Averaging (CA) CFAR method [2] can decrease the false alarms with the trade-off of increased missed detections. In some examples, the OS CFAR method is applied. The next step is the CA CFAR method. The energy of an unambiguous target is smeared in range direction while focused for an ambiguous one. As a result, instead of estimating the background within a ring, the background is estimated in the range direction to decrease the false alarms.

At operation 422, the ambiguous image is extracted from the SAR data. The SAR data is then inverse focused again at operation 424, before being focused according to range unambiguous echo at step 426 (using a filter matched to the unambiguous echo signal) to extract an unambiguous image from the SAR data which is free of nadir and range ambiguities. As before, the inverse focusing is achieved by applying the conjugate of the filter that was used for focusing the raw data according to the ambiguous region parameters. A successive application of focusing and inverse focusing is phase and amplitude preserving unless no suppression is performed.

Figure 4b shows an alternative example of the method described above. Instead of dual focusing which includes the inverse focusing and refocusing steps, the method described in figure 4b replaces these operations with a single focusing operation termed 'delta focusing.' In another words, at operation 413 the SAR data (without nadir) is delta focused according to the ambiguous echo instead of being dual focused. Similarly, at operation 421 the SAR data is delta focused according to the unambiguous echo instead of being dual focused to extract the unambiguous image free of any ambiguities. The basic idea is that after focusing the SAR raw data according to the nadir parameters (operation 410 in both methods), the data is unfocused SAR data with a different configuration for the targets at the ambiguous and/or unambiguous regions and can be focused with the proper parameters to extract the ambiguous and/or the unambiguous SAR image. As a result, the computational burden is approximately halved using delta focusing. The waveform encoded using UDC and APC is compatible with both post-processing methods (i.e., double dual focusing and delta focusing).

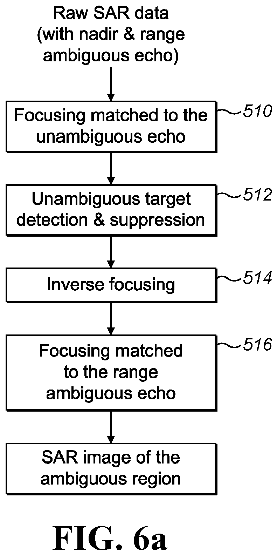

Figure 6a is a flowchart showing an example of an alternative method. In this case, the raw SAR data is initially focused according to the unambiguous echo signal at operation 510. At operation 512, an unambiguous image in the SAR is detected and suppressed. The SAR data is then inverse focused at operation 514 (now without the unambiguous data), before being focused again according to the ambiguous echo signal at operation 516. This allows the extraction of the ambiguous image from the SAR data.

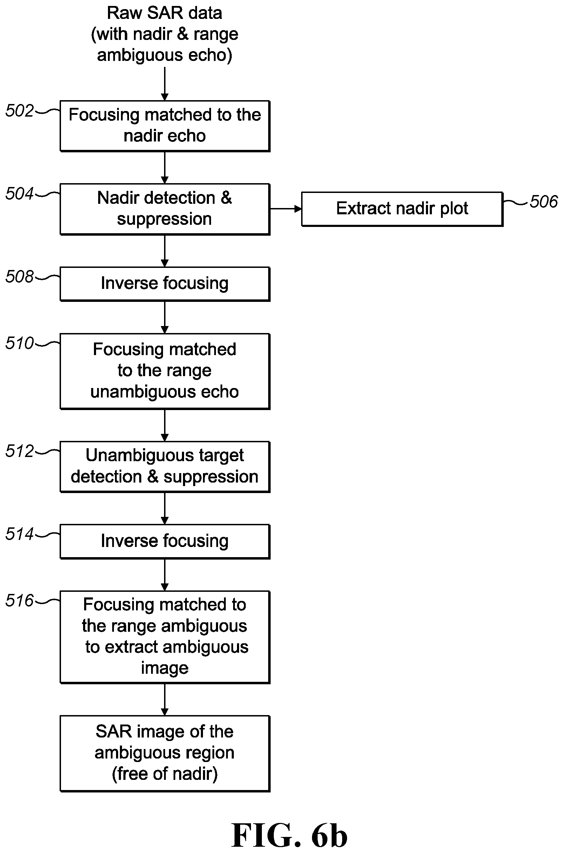

Figure 6b is a flowchart showing another alternative method according to some examples. Here, the raw SAR data is initially processed to remove the nadir from the SAR data, and to obtain a plot of the nadir (operations 502-506), before being inverse focused at operation 508. Subsequently, the operations 510-516 identical to those shown in figure 6a are performed to obtain an ambiguous image from the SAR data, but which is now free of nadir. As before, in another embodiment, the operations of inverse focusing 508 and focusing 510 in figure 6b can be replaced by a single delta focusing operation for computational efficiency. With both process 6a and 6b, being able to extract an image of the ambiguous region is an added and unexpected advantage of the disclosed method. The image of the ambiguous region provides additional imaging of a wider area that can prove useful for end users of the SAR data.

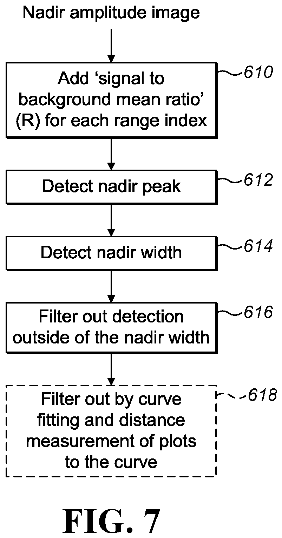

Figure 7 is a flowchart showing a method for detecting nadir in the SAR data using CA CFAR. The first task is to determine the number of guard and background cells, as well as the desired false alarm rate. The guard cells are placed adjacent to the Cell Under Test (CUT), both leading and lagging it. The purpose of these guard cells is to avoid signal (nadir) components from leaking into the background cells, which could affect accuracy of the noise estimate. In some examples, the number of guard and background cells are set to 5 and 15, respectively, and the desired false alarm rate is set to 0.001. However, it can be appreciated that these values can vary depending on the specific requirements of the method. After focusing the SAR data according to nadir (operation 410 in figures 4a and 4b), at operation 610 a signal to background mean ratio 'R' is added for each range index. At operation 612, the nadir peak is detected, and a width of the nadir is detected at operation 614. The nadir start (N1) and end (N2) indexes with reference to nadir peak index are detected using the function shown in Equation 7:

$$argmax_{N_1,N_2} \left( \frac{\frac{1}{N_2 - N_1 + 1} \sum_{i=N_1}^{N_2} S[k_{max} + i]}{\frac{1}{N_{max}/2 + N_1} \sum_{i=-N_{max}/2}^{N_1-1} S[k_{max} + i] + \frac{1}{N_{max}/2 - N_2} \sum_{i=N_2+1}^{N_{max}/2} S[k_{max} + i]} \right)$$

$$(7)$$

where $N_{max}$ is the maximum acceptable Nadir that is a function of slant range spacing and the maximum slope of the Earth assumption, $k_{max}$ is the nadir return peak index, and $S$ is the signal array calculated at operation 610 and is a function of the range index $K$. The argmax function returns a value of $N_1$ and $N_2$ that maximizes the function inside the brackets. $N_1$ is a negative integer value within ($-N_{max}/2+1, k_{max}-1$) and $N_2$ is a positive integer number within ($k_{max}+1, N_{max}/2-1$ ). At operation 616, the method filters out any detection that is outside the nadir margin width ($k_{max}+N_1, N_{max}+N_2$). Operation 618 is optional (as indicated by the dotted box) and involves curve fitting and distance measurement of the plots to the curve.

Additionally, as mentioned previously, both the OS CFAR and CA FAR are applied to detect the range ambiguity. In some examples, for the OS CFA$_R$ the desired false alarm rate is set at 0.001, and the noise power is estimated based on selection of the N$^{th}$ largest cell, where $N$ is 3/4 multiplied by the number of SAR data samples. For the CA CFAR that is subsequently applied, the desired false alarm rate is the same as OS CFAR, but the number of guard cells is set to 1000, background cells at $N_{chirp}$ - 1000, where $N_{chirp}$ is the pulse width x sampling rate.

The algorithm for the aforementioned methods is derived below for a low squint case but can be extended to the more general case. The baseband received signal for the unambiguous target can be approximated by:

$$s_0(t, \eta) = A_0 \omega_r \left( t - \frac{2R(\eta)}{c} \right) \omega_a (\eta - \eta_c) exp\left( -j\frac{4\pi R_0}{\lambda} \right)$$
$$exp(-j\pi K_a \eta^2) exp(j\pi\alpha t^2) rect\left[ \frac{t - \frac{2R(\eta)}{c}}{T_p} \right] \qquad (7.1)$$

where $\omega_r$ and $\omega_a$ represent the antenna pattern in azimuth and elevation. Respectively, $A_0$ is the amplitude of the signal, $\eta$ is the slow (or azimuth) time, $K_a$ is the azimuth pulse rate, R($\eta$) is the range to the target, $R_0$ is the minimum range to the target, and $\lambda$ is the wavelength.

The first operation 410 of focusing according to the ambiguous pulse rate doubles the pulse width while halving the pulse rate for the unambiguous signal. After range compression and Fourier Transform in azimuth direction, Range Doppler data can be expressed as:

$$s_{rc}(t, f_\eta) = A_0 A_1 \omega_r(t - \frac{2R(f_\eta)}{c})\omega_a(f_\eta - f_{\eta c})exp(-j\frac{4\pi R_0}{\lambda})$$
$$exp(-j\pi\frac{f_\eta^2}{K_a})exp(j\pi\frac{\alpha}{2}t^2)rect[\frac{t - \frac{2R(f_\eta)}{c}}{2T_p}] \qquad (8)$$

The Range Cell Migration (RCM) term in the range envelope is expressed according to the nadir distance:

$$\Delta R(f_\eta, R_n) = \frac{\lambda^2 R_n f_\eta^2}{8v_r^2}$$
$$= \Delta R(f_\eta, R_0)\Delta R(f_\eta, -N_{amb} * \frac{c}{2PRF}) \qquad (9)$$

The RCM can be corrected in Range Fourier Domain with a linear phase multiplication:

$$G_{rcmc}(f_t) = exp(j\frac{4\pi f_t}{c}\Delta R(f_\eta, R_n)) \qquad (10)$$

After RCMC the signal can be written as follows:

$$s_{rcmc}(t, f_\eta) = A_0 A_1 \omega_r(t - \frac{2\Delta R(f_\eta, -N_{amb} * \frac{c}{2PRF})}{c})$$
$$\omega_a(f_\eta - f_{\eta c})exp(-j\frac{4\pi R_0}{\lambda})$$
$$exp(-j\pi\frac{f_\eta^2}{K_a})exp(j\pi\frac{\alpha}{2}t^2) \qquad (11)$$
$$rect[\frac{t - \frac{2R(f_\eta)}{c}}{2T_p}]$$

The last step is the azimuth compression with respect to the nadir range. In this case, the azimuth pulse rate can be expressed as:

$$K_{a,N_{amb}} = K_a\frac{R_0}{R_0 - N_{amb} * \frac{c}{2PRF}} \qquad (12)$$

Finally, the extracted image of an unambiguous target after azimuth compression can be written as:

$$s_{im,amb}(t, \eta) = A_0 A_1 \omega_r(t - \frac{2\Delta R(R0, -N_{amb} * \frac{c}{2PRF})}{c})$$
$$\omega_a(\eta - \eta_c)exp(-j\frac{4\pi R_0}{\lambda})$$
$$exp(-j\pi K_a\frac{2R_0 PRF}{cN_{amb}}t^2)exp(j\pi\frac{\alpha}{2}t^2) \qquad (13)$$
$$rect[\frac{t - \frac{2R(f_\eta)}{c}}{2T_p}]$$

As a result, the signal after focusing according to the parameters corresponding to the ambiguous region is SAR raw data that can be considered as having been collected with a different configuration, and the signal no longer needs to be defocused and then refocused, but instead can be directly focused to extract the unambiguous image.

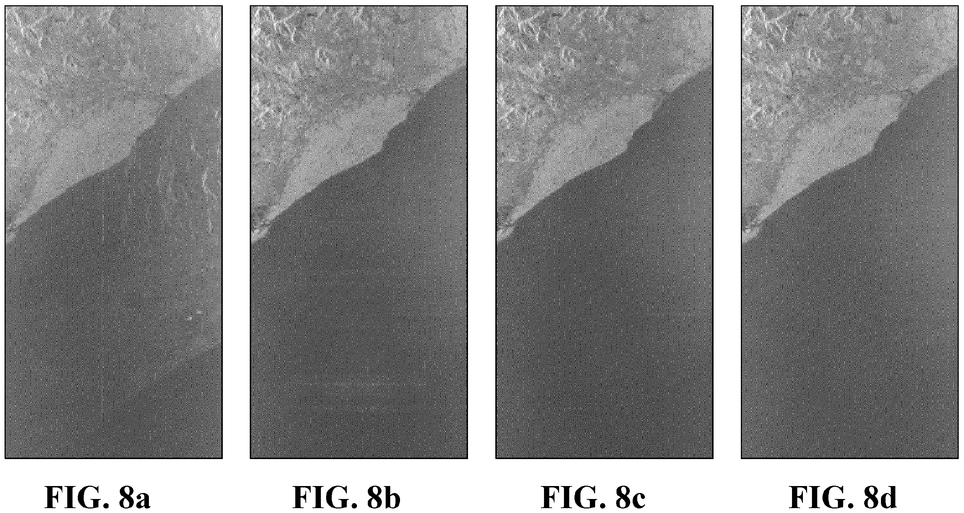

To verify the proposed range ambiguity suppression method, a series of SAR acquisitions were performed by using SAR satellites made by ICEYE Oy of Espoo, Finland. The imaged scene includes a calm water surface that is expected to coincide with a strong nadir echo, an ambiguous region return, and a mountainous area with strong scatterers, as illustrated in figure 8a. The SAR image shown in figure 8a is collected with waveform diversity using a combination of UDC and APC, but has not been post-processed yet to remove the ambiguities from the nadir and the other ambiguous regions. The mission planning was done to obtain a nadir line at nearly the middle of the swath. Incidence angle was selected as 37.3 degree to guarantee observation of an exaggerated ambiguity from a range ambiguous region. In the image shown in figure 8a, it is clear that the unambiguous signal, nadir and ambiguous signal are all included within the SAR data. In this example, the ambiguity index number of the nadir is 5.

Figure 8b shows the same SAR image with some processing to suppress the nadir reflection and the ambiguities from the range ambiguous regions. It can be seen that nadir reflection and the range ambiguity are substantially suppressed. However, at the middle of the image, there are range stripes that coincides with the nadir return and at the right of the image there are stripes that coincides with the strong range ambiguity return.

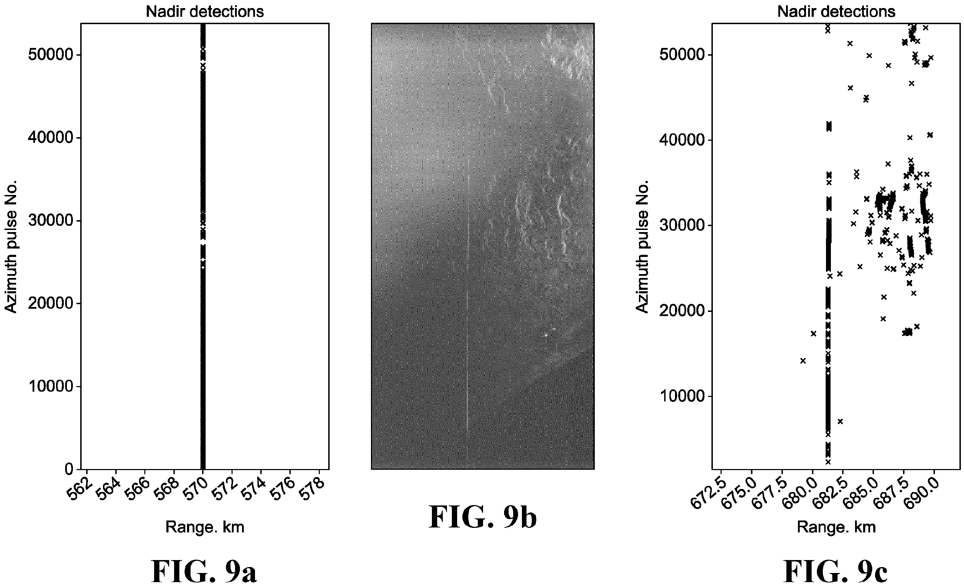

Further post processing is applied to suppress the residual range stripes. Firstly, the nadir is detected as it is presented in figure 9a. The estimated nadir was 570005.8 m, which is very close to the actual measured value. The strong scatterers labelled as nadir are suppressed by simply dividing the sample to the time-bandwidth product. The nadir free raw data is then focused to extract the unambiguous image. In figure 8c, the result of both the waveform diversity and the post processing are presented. It is clear that the range stripes at the middle of the image are related with nadir and are now fully suppressed.

The next operation is to detect and suppress the range ambiguity. The ambiguous image is presented in figure 9b and range ambiguity detection in figure 9c. Comparing the strong scatterers in the ambiguous image with the detection, it is observed that the algorithm performs quite well at detecting the targets in the range ambiguous region while not detecting the scatterers as targets in the unambiguous region. Another observation is that although the nadir was suppressed successfully in the previous operation, there is still a remaining part of the nadir that is not needed to be suppressed. This part can be filtered out using the nadir information extracted in the previous operation.

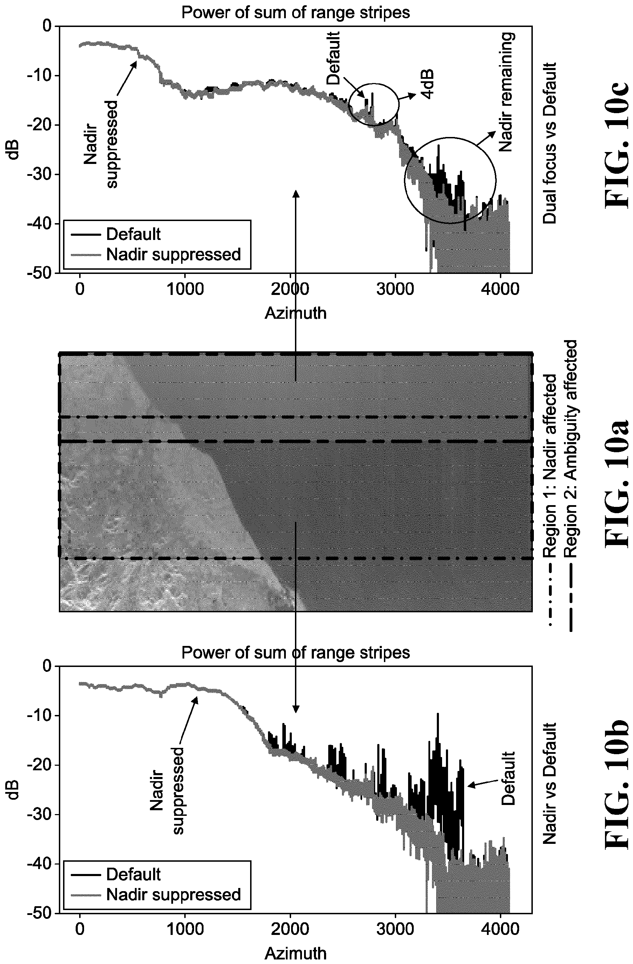

After detection and suppression of the range ambiguity, the SAR image is extracted and shown in figure 8d. It can be seen qualitatively that the ambiguities arising from the nadir and from the range ambiguous regions have been successfully removed. Quantifying the range ambiguity suppression performance is unfortunately not totally straightforward. Figures 10a, 10b, and 10c, provide a comparison. In figure 10a, a SAR image with range stripes is shown. The energy of the ambiguous target is smeared in the range direction. Therefore, the sum of the energy in range direction is an indication of the algorithm performance. Plots of the range sum of region 1 (the area bounded by the longer dashes and dots) of figure 10a for nadir and the range sum of region 2 (the area bounded by the shorter dashes and dots) of figure 10a for range ambiguity (vs azimuth) are presented in figures 10b and 10c, respectively, compared to a plot of the range sum (vs azimuth) of a default image. The default image is the image acquired with waveform diversity, but before the step of processing to use the waveform diversity to suppress the nadir and range ambiguities. After processing, the nadir ambiguity is observed to be suppressed both quantitatively and qualitatively within the regions where the desired signal is dominated by the nadir return. In figure 10c, the range ambiguity suppression performance is presented. Although qualitatively the range ambiguities are seen to be substantially suppressed, the background returns within the range ambiguous region are not low enough to allow for quantitatively validating a suppression performance of more than 4 dB using this method.

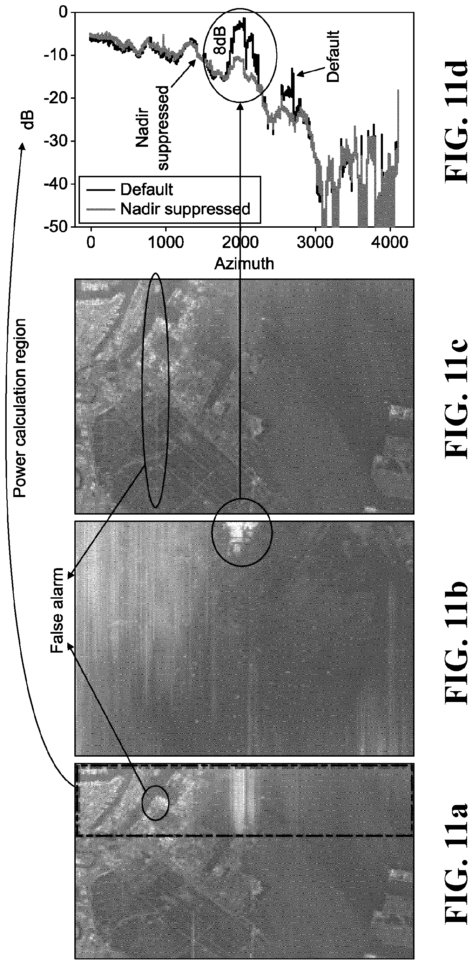

To obtain more performance data, another experiment with a very high incidence angle and PRF was designed. Nadir is not within the swath in this case, but the range ambiguity is quite strong as it is shown in figures 11a, 11b, and 11c. Clearly, the default image shown in figure 11a is highly affected with the range ambiguity. The ambiguous image shown in figure 11b proves that the anomalies in the default image are the result of the range ambiguity. The range ambiguity in the desired image is dramatically suppressed as it is seen qualitatively in figure 11c. To quantify the power, the range sum of the region is compared with the default in figure 11d. It is seen that the power is certainly suppressed, but the background reflectivity is again quite high, this preventing the suppression ratio to be quantified at more than 8 dB despite the method clearly working to remove range ambiguities. Lastly, the strong targets in the unambiguous regions may also be suppressed as a result of false alarms.

Increasing Swath Width

Typically, during SAR imaging, there is a trade-off between resolution and swath width, with "swath width" being measured in the range direction in this context: the larger the swath width, the lower the resolution in the range direction. This is a technical trade-off resulting from the pulsed nature of SAR. In an attempt to achieve relatively wide swath width with relatively low degradation in resolution, High Resolution Wide Swath ("HRWS") SAR imaging may be performed. This is a general term that can refer to any number of imaging methods that permit relatively wide swaths while mitigating the degradation in resolution that increasing swath width would normally entail.

One way to perform HRWS imaging is to use a staggered pulse repetition frequency with digital beamforming. However, doing this does not address the problem of range ambiguity. Consequently, its use is limited, for example to monitoring ship locations in the open ocean where the SAR satellite does not receive backscattered echoes from coastal areas. Additionally, digital beamforming is used only in satellites that can support multichannel reception of signals, which are relatively expensive.

In contrast, in at least some embodiments herein, HRWS imaging is achieved by staggering the PRF of the pulses transmitted by the satellite 100 and applying waveform diversity to encode those staggered pulses. For example, waveform diversity may be applied by having at least one pulse be an up chirp without additional encoding, and at least one pulse be a down chirp without additional encoding. Additional pulses could also be encoded using up chirps or down chirps and an additional scheme, such as azimuth phase encoding or cyclic waveforms. This allows a wide swath image to be received by making use of imagery from what would otherwise be the ambiguous swaths (e.g., coming from edges of the beam or the side lobes) while suppressing range ambiguities, thereby improving resolution in the range direction. Consequently, the embodiments that combine staggered PRF and waveform diversity help to image a wider swath and to suppress range ambiguities, thereby facilitating wide swath images without the loss in resolution in the range direction seen in some HRWS imaging methods. This may permit, for example, increasing the swath width of a strip map mode image taken using a given SAR satellite from 35 km up to 100 km of swath width while maintaining typical strip map resolutions and not requiring any additional satellite passes or any additional imaging time. This represents a significant improvement in the swath width (285% improvement, in this example) with minimal increase in cost. The 100 km width is practically limited primarily by beamwidth and is dependent on the particular satellite configuration. Different satellite configurations may allow for even larger swath widths or even better improvement in swath width. As another example, this application of waveform diversity is not limited to monitoring ships in the open ocean; rather, due to range ambiguity suppression, ships near coastlines, or even entirely land regions, may be monitored.

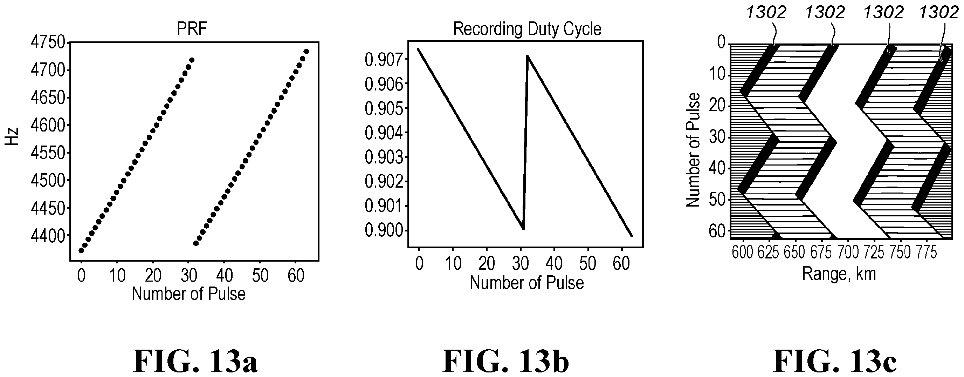

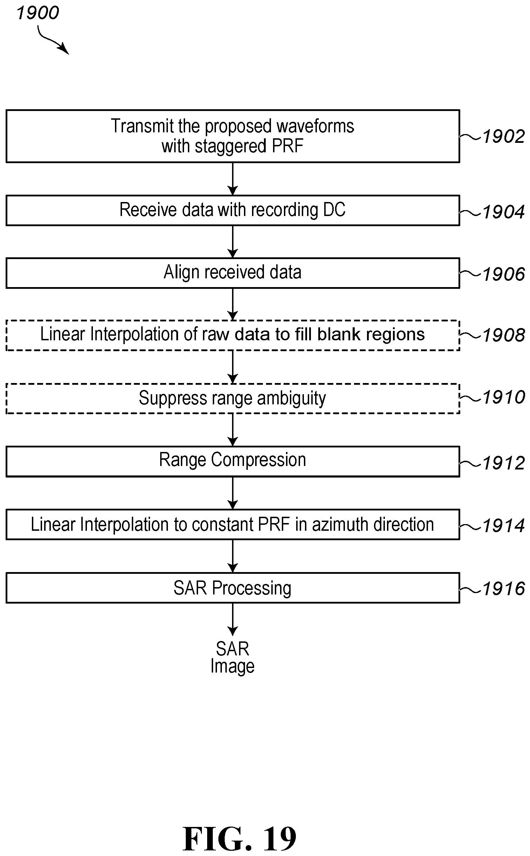

Referring now to Figure 19, there is shown an example method 1900 of acquiring and processing SAR echo data to perform HRWS SAR imaging as described above, according to an example embodiment. Generally speaking, and as further described in respect of Figures 13 to 18c below, the method 1900 comprises transmitting a series of pulses with proposed waveforms that are waveform diverse with respect to each other according to a staggered PRF (block 1902); receiving echo data with the recording duty cycle (DC) during recording windows respectively corresponding when the transmitted pulses were sent (block 1904); aligning the received echo data in accordance with their respective recording windows (block 1906); optionally, performing interpolation, such as but not limited to linear interpolation, to fill in any "blank regions" where received echo data is lacking (block 1908); optionally, suppressing range ambiguities generally as described in respect of Figures 1 to 8c (block 1910); and performing range compression (block 1912), interpolation (such as but not limited to linear interpolation) to a constant PRF in the azimuth direction (block 1914), and other types of SAR processing (block 1916).

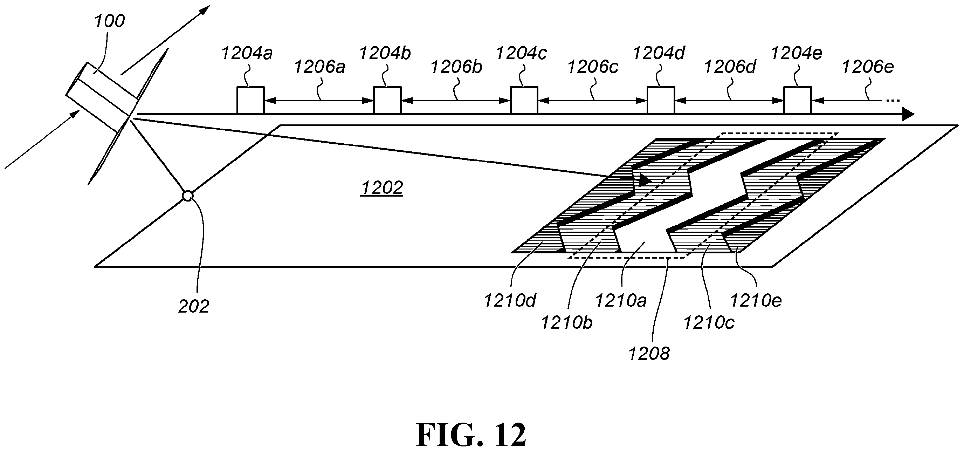

The overarching method 1900 is also depicted schematically in Figure 12. In Figure 12, satellite 100 is traveling in the azimuth direction and is sending first through fifth pulses 1204a-e (generally, "pulses 1204") in the range direction. The first through fifth pulses 1204a-e are an example subset of a larger series of pulses 1204 used for imaging (not depicted). A nadir point 202 is below the satellite 100. The first, third, and fifth pulses 1204a,c,e are each modulated using an up chirp, and the second and fourth pulses are each modulated using a down chirp 1204b,d. As the different pulses 1204a-e are modulated using up and down chirps, the pulses 1204a-e are waveform diverse. In at least some other embodiments, different types of waveforms (e.g., APC and cyclic waveforms) and/or more than two different types of waveforms may be used for modulation. In at least some embodiments, some or all of the waveforms used for modulating the pulses 1204 are orthogonal to each other.

The antenna is directed at the ground 1202 and the pulses 1204 are transmitted with a view to recording enough radar echoes of the pulses 1204 so as to be able to generate an SAR image of a processed image region 1208. As discussed in further detail below, the pulses 1204 are transmitted with a varying PRF. Respectively following the first through fifth pulses 1204a-e are first through fifth recording windows 1206a-e (generally, "recording windows 1206"). Each recording window 1206 starts at the end of one pulse 1204 and ends with the start of the successive pulse 1204. In other words, during the actual transmission of each pulse 1204, satellite 100 is unable to record echoes; the satellite 100 only records echoes when it is not transmitting. Also as discussed in further detail below, as a result of how the PRF is varied in the depicted example embodiment, the recording windows 1206 shift over time; this results in the sawtooth-shaped areas shown on the ground 1202 in Figure 12. The central swath is an unambiguous swath 1210a, and the width of this unambiguous swath 1210a is supplemented by portions of first and second neighboring swaths 1210b,c on either side of the unambiguous swath 1210a, subject to the limits of the beamwidth. The unambiguous swath 1210a is unambiguous by virtue of corresponding in this example to the area imaged by a down chirp-modulated pulse 1204, while the two neighboring swaths 1210b,c are ambiguous in this case by virtue of both being imaged by up chirp-modulated pulses 1204. Consequently, non-corresponding portions of the neighboring swaths 1210b,c are used to supplement the image provided by the central unambiguous swath 1210a. "Non-corresponding portions" refers to different relative range positions for each swath; for example, in Figure 12, a top portion by range of the first neighboring swath 1210b and a bottom portion by range of the second neighboring swath 1210c are selected to supplement the central unambiguous swath 1210a.

As mentioned above, the PRF (and consequently the PRI) for the pulses 1204a-e varies from pulse to pulse. This is shown in the graph of Figure 13a, which shows the PRF scheme for a series of 64 pulses. As shown in Figure 13a, the PRF varied in accordance with this scheme increases from pulse 0 to pulse 31, then resets or "wraps around" for pulse 32 and increases from pulse 32 to 63. Pulse 64 (not depicted) would have the same PRF as pulse 0, and pulses 64 to 127 would respectively be transmitted at the PRFs of pulses 0 to 64. While the PRF is shown as resetting every 32 pulses in Figure 13a, in other embodiments (not depicted), the PRF may not reset, or may reset at a different number of pulses. Resetting or "wrapping around" the PRF in this manner, and particularly in the middle of the series of pulses, helps to reduce the number of successive receive windows where no data is in fact received by the satellite 100 (or other SAR platform) in the azimuth direction. In Figure 13a, pulses 32 and 63 have higher PRFs than pulses 0 and 31 by ½ pulse width, respectively. This is done to avoid missing one half of the received signal every 32nd received echo. While Figure 13a shows the PRF repeating halfway through the 64 pulses, more generally different portions of the $N$ total pulses may be transmitted according to different patterns and the delineation between different portions need not be half the $N$ pulses. For example, the pulses may vary from a first PRF to a second PRF over 25% of the $TV$ pulses, and then from a third PRF to a fourth PRF over the remaining 75% of the $N$ pulses. As another example, PRF may be selected randomly over the $N$ pulses.

A large difference between any two successive PRIs between pulses 1204 is beneficial in that this increases the duration of the recording window 1206 between those pulses 1204. However, increasing PRI decreases PRF, and the PRF is kept above a PRF floor for various imaging reasons, such as for reduced azimuth and range ambiguities. "Wrapping", or resetting, the PRF over a series of pulses accordingly provides flexibility to adjust the PRI while maintaining the PRF above its floor.

More particularly, keeping in mind that mean PRF is selected in order to reduce or minimize range and azimuth ambiguities, the PRI for any particular pulse $i$ is selected as:

$$PRI[i] = PRI_{max} - \frac{\Delta\tau}{N_s}\left(i - [2*i/[N]]\frac{N-1}{2}\right) \tag{14}$$

where $PRI_{max}$ is:

$$PRI_{max} = PRI_{mean} + \frac{N-1}{2}\frac{\Delta\tau}{N_s} \tag{15}$$

and where $\tau$ is chirp duration, $N_s$ is the mean number of pulses in transit either to or from the ground 1202 computed using time to the center of the processed image region 1208, $N$ is the number of pulses over which the PRF variation repeats (i.e., $N$ = 64 in Figure 13a), and $\Delta$ is an operator-adjustable value that permits fine tuning the slope of the PRF values.

The largest swath time corresponding to an unambiguously imaged swath is limited to the summation of the minimum of the sum of $n$ successive PRI values of the series of pulses 1204, where $n$ is the number of different waveforms, which may be orthogonal, used for waveform diversity:

$$SW_{max} = min\left(\sum_{i=0}^{n-1} PRI_i\right) \tag{15.1}$$

where $SW_{max}$ is maximum swath time.

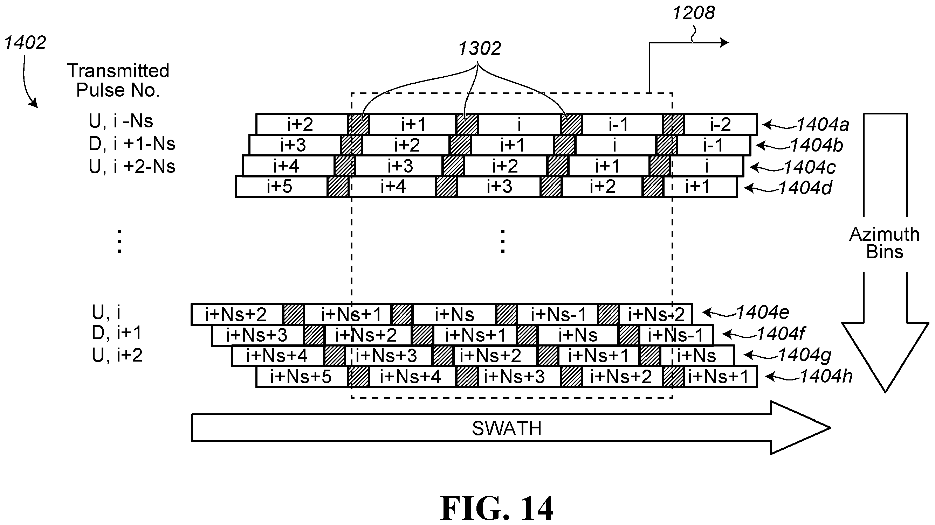

For example, in Figure 13b where n = 2 (for UDC), the minimum of the summation of n = 2 PRIs is 0.42 ms, which corresponds to 63.5 km of unambiguous swath width. The swath width may be increased not only by setting a lower mean PRF but also by tolerating some ambiguous data within the processed image region 1208. Additionally, as discussed in more detail in Figure 14 below, the PRF is selected such that the total shift of the record windows 1206 results in n extracted records within the processing window for each pulse 1204. While the Doppler mismatch due to range differences results in a smear of any unwanted signal, this effect is disregarded in the example embodiments.

Additionally, in order to reduce or minimize the number of successive "no data" values, the PRF is selected to increase sufficiently quickly, thereby decreasing PRI and permitting larger record windows 1206:

$$\Delta_{PRI} = \Delta\frac{\tau}{N_s} \tag{16}$$

where $\tau$ is the pulse width, $N_s$ is the mean number of pulses in transit either to or from the ground 1202, and $\Delta$ is an operator-adjustable value that permits fine tuning the slope of the $\Delta_{PRI}$ values. As mentioned above, in some situations if the PRI were allowed to increase or decrease monotonically over all N pulses, PRI may decrease to an extent that unambiguous SAR imagery cannot be obtained. Consequently, PRI is periodically reset or "wrapped around" as seen in Figure 13a.

Figure 13b is a graph of recording duty cycle (i.e., the duty cycle of the recording windows 1206) corresponding to the PRF graph of Figure 13a. Here, the duty cycle of any particular recording window 1206 is determined with reference to the time difference between the start of the pulse 1204 that precedes that recording window 1206 to the end of that recording window 1206, keeping in mind that the duration of the pulses 1206 themselves is constant. Accordingly, a larger duty cycle refers to a larger PRI (and smaller PRF) and vice-versa, as evidenced by the inverse relationship between PRF and duty cycle shown in Figures 13a and 13b. In Figure 13b, the lowest recording duty cycle is 90%, which means the maximum duty cycle of the transmitted pulses 1204 is 10%. Staggering the PRF accordingly also staggers the recording windows 1206 and data reception.

Figure 13c depicts the theoretical data that is received in accordance with the PRF of Figure 13a and recording duty cycle of Figure 13b; in Figure 13c, $n = 5$ different waveforms as opposed to $n = 2$ as discussed above where alternating pulses 1204 are respectively modulated only by up chirps and down chirps, and the data is shown after it has been aligned as discussed in more detail below in respect of Figure 14. For $n = 5$, five different (and, in at least some embodiments, orthogonal) waveforms may be generated by combining up chirps and down chirps with other modulation schemes such as APC or CF. No-data regions 1302 shown in black in Figure 13c include durations during which the pulses 1204 are being transmitted, and consequently any received data is insufficiently powerful relative to the transmitted pulses 1204 to be practically usable. In Figure 13c, the central swath 1210a corresponds to data being aligned such that the center of the processed image region 1208 corresponds to antenna beam center. One recording window 1206 includes data from the preceding and following (as measured in terms of range at any given azimuth) regions (e.g., data for the central swath 1210a includes data for the second through fourth neighboring swaths 1210b-e) so that each record is repeated four times; consequently, data size is multiplied by $n = 5$. Parameters such as mean PRF, $\Delta_{PRI}$, and n may be fine tuned by reviewing expected data as graphed in Figure 13c to widen swath width and reduce the number of no data regions.

Figure 14 shows how received echoes are aligned following receipt and how they correspond to azimuth position. This corresponds to block 1906 of Figure 19. In Figure 14, $n = 5$ and echoes are indexed by $i$. Various recording windows 1206 are shown at their respective azimuth positions, with the different azimuth positions indexed according to different transmitted pulse numbers as indicated by a pulse index 1402 on the left side of Figure 14. The pulse index 1402 shows that the pulses are modulated using alternating up chirps and down chirps; they are further modulated with additional waveforms (not indicated in Figure 14) to achieve $n = 5$. The first pulse 1402 is indexed as $i - N_s$ in Figure 14, the second pulse as $i + 1 - N_s$, and this continues until the last and latest pulse for $N = 64$ is indexed as $i + 63 - N_s$, although the latest pulse depicted in Figure 14 is indexed as $i + 3$. First through eighth azimuth bins 1404a-h (generally, "azimuth bins 1404") respectively corresponding to the pulses 1402 sent at different times (and consequently different azimuth positions) are also shown in Figure 14.

In accordance with the expected received data shown in Figure 13c, the no data regions 1302 and the recording windows 1206 shown in Figure 14 are sliding and part of a larger sawtooth/zigzag shape that is a result of the varying PRF. The processed image region 1208 is overlaid on to the azimuth bins 1404.

If waveform diversity were not being applied to the pulses 1402, the received echoes would be ambiguous with each other and, for any given azimuth bin 1404, data received at any given azimuth bin 1404 would not be useful for widening the width of the swath corresponding to any other received data of that azimuth bin 1404. As mentioned above, one way to address this issue is to use digital beamforming. However, that requires multiple antennas and significant digital signal processing, which may not be technically feasible for certain deployments. Even when using digital beamforming, range ambiguity may still be problematic if antenna beamwidth is insufficiently narrow.

In Figure 14, for the first azimuth bin 1404a, the received signals are indexed $i - 2, i - 1, i, i + 1$, and $i + 2$, each of which corresponds to a differently modulated transmitted pulse 1402 since $n = 5$. By virtue of knowing which modulated pulse 1202 corresponds to which swath 1210a-e for any given azimuth position, the received data is aligned as shown in Figure 14 not only for the first azimuth bin 1404a, but also for the second through eighth azimuth bins 1404b-h. Alignment is determined based on time, based on the fact that the pulses 1204 travel at $c$ and based on known range values. For example, in the first azimuth bin 1404a, received signal $i$ corresponding to the central swath 1210a corresponds to transmitted pulse 1204 $i - N_s$, with the received signals $i - 2, i - 1, i + 1$, and $i + 2$ being similarly aligned to the second through fourth swaths 1210b-e. Similarly, received data corresponding to transmitted pulse 1402 $i$ is indexed as received data $i + N_s$ in the fifth azimuth bin 1404e.

Consequently, the images of different swaths for a given azimuth bin 1404 can be combined to increase swath width. For example, for the first azimuth bin 1404a in Figure 14, within the processed image region 1208, received data $i$ corresponds to the central swath 1210a and received data $i + 1$ and $i - 1$ respectively correspond to the first and second neighboring swaths 1210b,c. Data corresponding to the neighboring swaths 1210b,c may be combined with the data from the central swath 1210a to effectively increase the width of the central swath 1210a. As received data $i - 1, i$, and $i + 1$

correspond to differently modulated pulses 1204, all the received data may be combined to enlarge swath width subject to beamwidth. In an example where $n = 2$, non-corresponding portions of the first and second neighboring swaths 1210b,c may be combined with the data from the central swath 1210a to enlarge swath width to a theoretically lesser extent, again subject to beamwidth. Similarly, in an example where $n = 3$, the entirety of the first and second neighboring swaths 1210b,c may be combined with the central swath 1210a subject to beamwidth because each of the swaths 1210a-c corresponds to a different waveform.

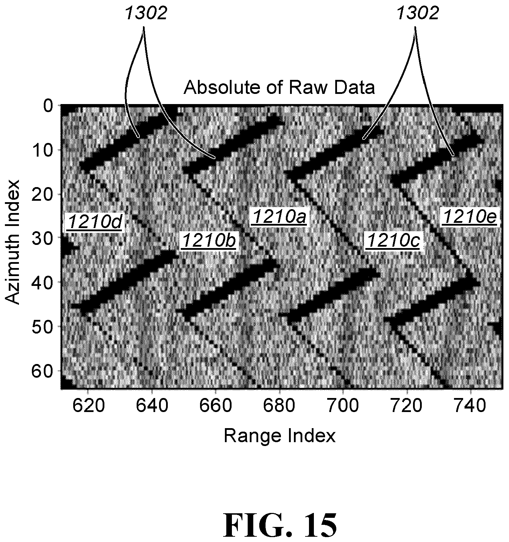

Figure 15 shows the absolute value of actual raw data acquired experimentally and aligned as described above in respect of Figure 14 for $n = 5$. Figure 15 shows the no-data regions 1302. In at least some embodiments, these no-data regions 1302 may be filled in by applying interpolation, such as linear interpolation, based on the data surrounding the no data regions 1302. For example, data values on either side of the no-data regions 1302 in the azimuth direction may be used to linearly interpolate and fill in the no-data regions 1302. This corresponds to block 1908 of Figure 19. Similarly, although not expressly depicted, other image processing may be done to the raw data represented in Figure 15: suppressing of range ambiguity as contemplated in respect of Figures 1 to 8c, which corresponds to block 1910 of Figure 19; range compression, as contemplated in block 1912 of Figure 19; interpolation to a constant PRF in the azimuth direction, as contemplated in block 1914 of Figure 19, which may be linear interpolation (as noted in Figure 19) or non-linear; and various other types of SAR processing as desirable, as contemplated in block 1916 of Figure 19. Range compression in particular may be done before or after interpolation to a constant PRF. Similarly, Figure 19 shows that blank regions are filled via interpolation at block 1908 and interpolation to constant PRF is performed after range compression at block 1916; should interpolation be done only before range compression, increased azimuth side lobes may be observed in the received data.

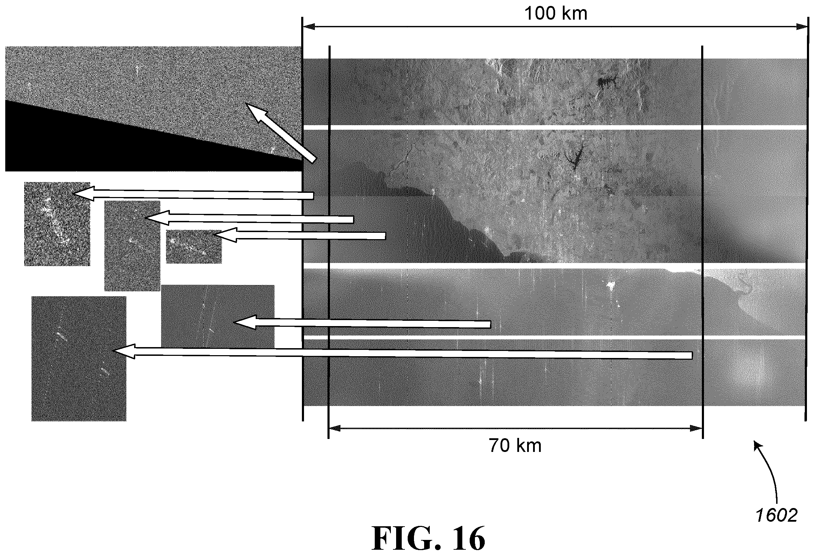

Figure 16 shows an image experimentally acquired with the method 1900 of Figure 19 using $n = 2$, where the pulses 1204 are modulated using up and down chirps only. No electronic beam steering was applied. The swath width is 100 km. The region of interest 1602, 70 km wide, includes not only ships in the water but also an urban region on land; both ships and land have high reflectivity that may alias with each other were waveform diversity not applied. Various ground range detected ("GRD") images from the region of interest 1602 are shown in magnified view in Figure 16.

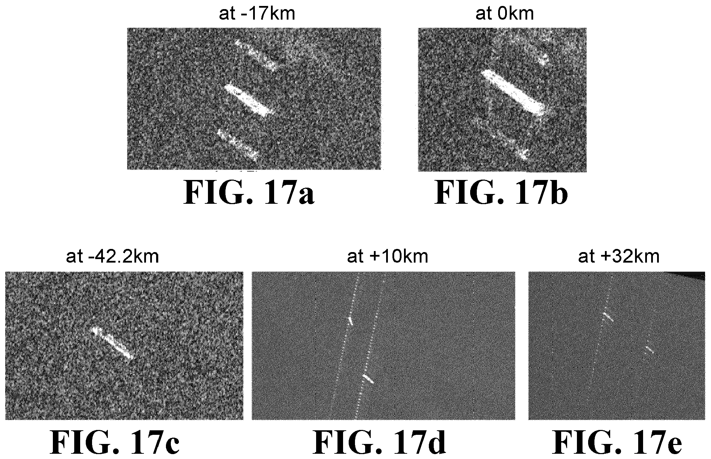

Figures 17a-e show images of various ships from the region of interest 1602 in Figure 16. Figures 17a-e respectively depict one or more ships at -17 km from scene center, 0 km from scene center, -42.2 km from scene center, +10 km from scene center, and +32 km from scene center. It can be seen that a target at -42.2 km and another at +32 km can be easily detected and even classified due to the increased swath width at high resolution in strip map imaging mode enabled by applying waveform diversity.

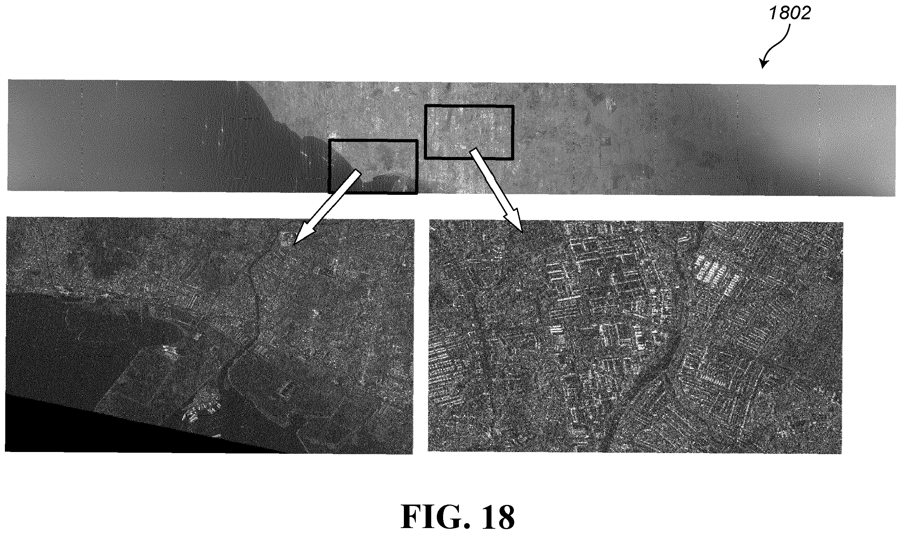

In Figure 18, a portion 1802 of the urban region from the region of interest 1602 in Figure 16 is shown, as are two magnified areas from that portion 1802. This demonstrates that urban regions can also be monitored with the method 1900 of Figure 19. The azimuth side lobes are higher in an urban region, as expected. The number of successive blank azimuth bins 1404 is up to 3, resulting in increased azimuth side lobes.

Electronic beam steering may be applied to focus on the echoes while receiving the data in any of the embodiments described above. This may be done, for example, to increase the signal-to-noise ratio of received data, which may consequently increase swath width and/or reduce ambiguities in swaths. For example, the satellite 100 may transmit pulses 1204 while focusing on scene center within the central swath 1210a, and beam steering may be used to focus on echoes coming from the neighboring swaths 1210b-e.

There is described in the foregoing a satellite suitable for implementing any of the methods of operation described here. For a satellite or other platform already in orbit, the methods described here may be implemented by suitably controlling the satellite, for example from the ground using a suitable computing system. In other words, a SAR may be operated from the ground and some of the methods described here may be implemented in software. Therefore, in an aspect the invention may provide a computer readable medium comprising instructions which, when implemented by a processor in a computing system, cause the computing system to operate a SAR according to any of the methods described here.

Some embodiments of the invention described here provide a ground station computing system configured to operate a SAR according to any of the methods described here.

In any of the embodiments of the invention, the satellite may be travelling in, or configured to travel in a low earth orbit.

Any of the computing systems described here may be combined in a single computing system with multiple functions. Similarly, the functions of any of the computing systems described herein may be distributed across multiple computing systems.

Some operations of the methods described herein may be performed by software in machine readable form e.g., in the form of a computer program comprising computer program code. Thus, some aspects of the invention provide a computer readable medium which when implemented in a computing system cause the system to perform some or all of the operations of any of the methods described herein. The computer readable medium may be in transitory or tangible (or non-transitory) form such as storage media include disks, thumb drives, memory cards etc. The software can be suitable for execution on a parallel processor or a serial processor such that the method operations may be carried out in any suitable order, or simultaneously.

This application acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The embodiments described above are largely automated. In some examples a user or operator of the system may manually instruct some operations of the method to be carried out.

In the described embodiments of the invention the system may be implemented as any form of a computing and/or electronic system as noted elsewhere herein. For example, the ground station may comprise such a computing and/or electronic system. Such a system may comprise one or more processors which may be microprocessors, controllers, or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the method in hardware (rather than software or firmware). Platform software comprising an operating system, or any other suitable platform software may be provided at the computing-based device to enable application software to be executed on the device.

The term "computing system" is used herein to refer to any device with processing capability such that it can execute instructions. Those skilled in the art will realise that such processing capabilities may be incorporated into many different devices and therefore the term "computing system" includes PCs, servers, smart mobile telephones, personal digital assistants, and many other devices.

It will be understood that the benefits and advantages described above may relate to one embodiment or may relate to several embodiments. The embodiments are not limited to those that solve any, or all of, the stated problems, or those that have any or all of the stated benefits and advantages.

Any reference to "an" item or "piece" refers to one or more of those items unless otherwise stated. The term "comprising" is used herein to mean including the method steps or operations or elements identified, but that such steps or operations or elements do not comprise an exclusive list and a method or apparatus may contain additional steps or operations or elements.

Further, to the extent that the term "includes" is used in either the detailed description or the claims, such term is intended to be inclusive in a manner similar to the term "comprising" as "comprising" is interpreted when employed as a transitional word in a claim.

The figures illustrate exemplary methods. While the methods are shown and described as being a series of acts that are performed in a particular sequence, it is to be understood and appreciated that the methods are not limited by the order of the sequence. For example, some acts can occur in a different order than what is described herein. In addition, an act can occur concurrently with another act. Further, in some instances, not all acts may be required to implement a method described herein.

The order of the steps or operations of the methods described herein is exemplary, but the steps or operations may be carried out in any suitable order, or simultaneously where appropriate. Additionally, steps or operations may be added or substituted in, or individual steps or operations may be deleted from any of the methods without departing from the scope of the subject matter described herein. Aspects of any of the examples described above may be combined with aspects of any of the other examples described to form further examples.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

List of References

[1] Herman Rohling, "Radar CFAR Thresholding in Clutter and Multiple Target Situations," IEEE Transactions on Aerospace and Electronic Systems, vol. 19, pp. 608-621, 1983.

[2] X. Wen, X. Qiu,B. Han, C.Ding , B. Lei and Q. Chen, "A Range Ambiguity Suppression Processing Method for Spaceborne SAR with Up and Down Chirp Modulation", Sensors 2018, 18, 1454. https://doi.org/10.3390/s18051454

**Claims**

1. A method of processing synthetic aperture radar ("SAR") echo data, the method comprising:

    (a) receiving data representing echoes of a transmitted series of radar pulses, wherein a pulse repetition interval ("PRI") varies between successive ones of the pulses, and wherein at least two different waveforms are used to modulate the pulses and are respectively used to image at least two different swaths;
    (b) aligning the received data into azimuth bins based at least on receipt times of the echoes; and
    (c) processing the received data to generate an image, wherein the image is of at least a first swath imaged using one of the waveforms and a second swath that neighbors the first swath and that is imaged using another of the waveforms.

2. The method of claim 1, wherein the at least two different waveforms comprise an up chirp and a down chirp.

3. The method of claim 2, wherein the at least two different waveforms further comprise another up chirp or down chirp further encoded using azimuth phase coding.

4. The method of any one of claims 1 to 3, wherein the at least two different waveforms further comprise another up chirp or down chirp further encoded using a cyclic waveform.

5. The method of any one of claims 1 to 4, further comprising applying dual focusing to the received data to suppress range ambiguities.

6. The method of any one of claims 1 to 5, wherein the at least two different waveforms are orthogonal to each other.

7. The method of any one of claims 1 to 6, wherein the radar pulses are transmitted according to a PRI scheme that repeats every $N$ pulses.

8. The method of claim 7, wherein the PRI repeatedly increases or decreases monotonically repeatedly over the $N$ pulses.

9. The method of claim 8, wherein the PRI increases or decreases monotonically once over a first portion of the $N$ pulses, and again over a second portion of the $N$ pulses, wherein minimum and maximum PRIs differ for the first and second portions.

10. The method of any one of claims 7 to 9, wherein the image is of a processed image region, and wherein a mean PRI for the $N$ pulses is determined as

$$PRI(i) = PRI_{max} - \frac{\Delta \tau}{N_s}\left( i - \lfloor 2 * i / N \rfloor \frac{N-1}{2}\right),$$

    wherein

$$PRI_{max} = PRI_{mean} + \frac{N-1}{2}\frac{\Delta \tau}{N_s},$$

    $\tau$ is chirp duration, $N_s$ is a mean number of the pulses in transit either to or from ground computed using time to center of the processed image region, and $\Delta$ is a variable to permit fine tuning of the mean PRI.

11. The method of any one of claims 1 to 10, wherein the swaths neighbor each other and a border delineating the swaths is sawtoothed.

12. The method of any one of claims 1 to 11, further comprising:

   (a) transmitting the pulses; and
   (b) receiving the echoes, wherein electronic beam steering is applied to focus on the echoes while receiving the data.

13. The method of claim 2, wherein an up chirp and a down chirp are used to modulate the pulses, wherein the at least two different swaths comprise a central swath and two neighboring swaths, and wherein non-corresponding portions of the two neighboring swaths and the central swath are used to generate the image.

14. A synthetic aperture radar ("SAR") platform comprising:

   (a) an antenna;
   (b) a computing system communicatively coupled to the antenna, the computing system configured to:

      (i) transmit a series of radar pulses, wherein a pulse repetition interval ("PRI") varies between successive ones of the pulses, and wherein at least two different waveforms are used to modulate the pulses and are respectively used to image at least two different swaths;
      (ii) receive echoes of the radar pulses; and
      (iii) store or transmit to ground data representing the echoes.

15. At least one non-transitory computer readable medium having stored thereon computer program code that is executable by at least one processor and that, when executed by the at least one processor, causes the at least one processor to perform the method of any one of claims 1 to 13.

**FIG. 1**

**FIG. 2**

EP 4 641 254 A1

**FIG. 3a**

**FIG. 3b**

Raw SAR data
(with nadir & range
ambiguous echo)

410 — Focusing matched to
the nadir echo

412 — Nadir detection &
suppression → Extract nadir plot — 414

416 — Inverse focusing

418 — Focusing matched
to the range
ambiguous echo

420 — Ambiguity detection
& suppression → Extract ambiguous
image — 422

424 — Inverse focusing

426 — Focusing matched
to the range
ambiguous echo to
extract unambiguous
image (free of nadir &
range ambiguity)

# FIG. 4a

Raw SAR data
(with nadir & range
ambiguous echo)

410 — Focusing matched to
the nadir echo

412 — Nadir detection &
suppression → Extract nadir plot ~414

413 — Delta focusing
according to the range
ambiguous echo

420 — Ambiguity detection
& suppression → Extract ambiguous
image ~422

421 — Delta focusing
according to the range
unambiguous echo to
extract unambiguous
image (free of nadir
& range ambiguity)

**FIG. 4b**

**FIG. 5a**

**FIG. 5b**

Raw SAR data
(with nadir & range
ambiguous echo)

Focusing matched to the
unambiguous echo —510

Unambiguous target
detection & suppression —512

Inverse focusing —514

Focusing matched
to the range
ambiguous echo —516

SAR image of the
ambiguous region

# FIG. 6a

Raw SAR data
(with nadir & range
ambiguous echo)

502 — Focusing matched to the
nadir echo

504 — Nadir detection &
suppression → Extract nadir plot —506

508 — Inverse focusing

510 — Focusing matched
to the range
unambiguous echo

512 — Unambiguous target
detection & suppression

514 — Inverse focusing

516 — Focusing matched to
the range ambiguous
to extract ambiguous
image

SAR image of the
ambiguous region
(free of nadir)

**FIG. 6b**

Nadir amplitude image

Add 'signal to background mean ratio' (R) for each range index ~610

Detect nadir peak ~612

Detect nadir width ~614

Filter out detection outside of the nadir width ~616

Filter out by curve fitting and distance measurement of plots to the curve ~618

**FIG. 7**

FIG. 8d

FIG. 8c

FIG. 8b

FIG. 8a

**FIG. 9a**

**FIG. 9b**

**FIG. 9c**

EP 4 641 254 A1

Power of sum of range stripes

dB

Nadir suppressed

Default

4dB

Nadir remaining

Default
Nadir suppressed

Azimuth

Dual focus vs Default

**FIG. 10c**

Region 1: Nadir affected
Region 2: Ambiguity affected

**FIG. 10a**

Power of sum of range stripes

dB

Nadir suppressed

Default

Default
Nadir suppressed

Azimuth

Nadir vs Default

**FIG. 10b**

FIG. 11a     FIG. 11b     FIG. 11c     FIG. 11d

**FIG. 12**

EP 4 641 254 A1

**FIG. 13a**

**FIG. 13b**

**FIG. 13c**

**FIG. 14**

FIG. 15

EP 4 641 254 A1

FIG. 16

at -17km

**FIG. 17a**

at 0km

**FIG. 17b**

at -42.2km

**FIG. 17c**

at +10km

**FIG. 17d**

at +32km

**FIG. 17e**

EP 4 641 254 A1

FIG. 18

*1900*

```
Transmit the proposed waveforms
with staggered PRF                    ⌐∼1902

         ↓

Receive data with recording DC        ⌐∼1904

         ↓

Align received data                   ⌐∼1906

         ↓

Linear Interpolation of raw data to fill blank regions   ⌐∼1908

         ↓

Suppress range ambiguity              ⌐∼1910

         ↓

Range Compression                     ⌐∼1912

         ↓

Linear Interpolation to constant PRF in azimuth direction   ⌐∼1914

         ↓

SAR Processing                        ⌐∼1916

         ↓

SAR
Image
```

# FIG. 19

Europäisches
Patentamt

European
Patent Office

Office européen
des brevets

# EUROPEAN SEARCH REPORT

**Application Number**

EP 24 17 1583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | USTALLI NERTJANA ET AL: "Experimental Demonstration of Staggered Ambiguous SAR Mode for Ship Monitoring With TerraSAR-X", IEEE TRANSACTIONS ON GEOSCIENCE AND REMOTE SENSING, vol. 61, 16 November 2023 (2023-11-16), XP093204207, USA ISSN: 0196-2892, DOI: 10.1109/TGRS.2023.3333932 Retrieved from the Internet: URL:https://ieeexplore.ieee.org/ielx7/36/10006360/10320398.pdf?tp=&arnumber=10320398&isnumber=10006360&ref=aHR0cHM6Ly9pZWVleHBsb3JlLmllZWUub3JnL2RvY3VtZW50LzEwMzIwMzk4> * sec. I, V; figures 1, 3; table 2 * | 1-15 | INV. G01S13/90 G01S13/22 G01S13/28 |
| X | US 2019/346556 A1 (INST ELECTRONICS CHINESE ACAD SCI) 14 November 2019 (2019-11-14) * paragraph [0086] - paragraph [0098]; figure 4 * | 1,6,7, 14,15 | |
| X | JUAN CHEN ET AL: "A new method of the high-resolution wide-swath SAR", 2007 IET INTERNATIONAL CONFERENCE ON RADAR SYSTEM, 15-18 OCT. 2007, 18 October 2007 (2007-10-18), page 42, XP055751057, DOI: 10.1049/cp:20070518 ISBN: 978-0-86341-848-8 * sec. 3.1, 3.2; figures 1-4 * | 1,6,7, 14,15 | TECHNICAL FIELDS SEARCHED (IPC) G01S |
| A | WO 2023/143828 A1 (ICEYE OY [FI]) 3 August 2023 (2023-08-03) * the whole document * | 3-5 | |

The present search report has been drawn up for all claims

| Place of search | Date of completion of the search | Examiner |
|---|---|---|
| Munich | 12 September 2024 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 24 17 1583

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2024

| Patent document cited in search report | | Publication date | Patent family member(s) | | Publication date |
|---|---|---|---|---|---|
| US 2019346556 | A1 | 14-11-2019 | CN | 109343009 A | 15-02-2019 |
| | | | US | 2019346556 A1 | 14-11-2019 |
| WO 2023143828 | A1 | 03-08-2023 | GB | 2615125 A | 02-08-2023 |
| | | | IL | 314443 A | 01-09-2024 |
| | | | TW | 202340748 A | 16-10-2023 |
| | | | WO | 2023143828 A1 | 03-08-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HERMAN ROHLING**. Radar CFAR Thresholding in Clutter and Multiple Target Situations. *IEEE Transactions on Aerospace and Electronic Systems*, 1983, vol. 19, 608-621

- **X. WEN** ; **X. QIU** ; **B. HAN** ; **C.DING** ; **B. LEI** ; **Q. CHEN**. A Range Ambiguity Suppression Processing Method for Spaceborne SAR with Up and Down Chirp Modulation. *Sensors*, 2018, vol. 18, 1454, https://doi.org/10.3390/s18051454